# EUROPEAN PATENT APPLICATION

(11) **EP 3 226 056 A1**
(43) Date of publication of application: **04.10.2017**
(21) Application number: 17171243.3
(22) Date of filing: 26.02.2015
(51) Int. Cl.: G02B 19/00, G02B 5/28, F21V 8/00, F21S 8/10, G02B 1/08, G02B 5/124, G02B 5/13, G02B 5/30

(54) **LIGHT SOURCE INCORPORATING MULTILAYER OPTICAL FILM**

(30) Priority: 07.03.2014 US 201461949496 P
(62) Divisional of application: 15708660.4
(71) Applicant: 3M Innovative Properties Company, St. Paul, MN 55133-3427 (US)
(72) Inventor: Liu, Tao, Saint Paul, MN 55133-3427 (US); Merrill, William W., Saint Paul, MN 55133-3427 (US); Napierala, Mark E., Saint Paul, MN 55133-3427 (US); Yust, David T., Saint Paul, MN 55133-3427 (US)
(74) Representative: Herzog, Fiesser & Partner Patentanwälte PartG mbB

(57) **Abstract**

A light source includes a lightguide comprising a top side comprising an optical film, a bottom side comprising a diffuse reflector, and an input side extending between the top and bottom sides; and an illumination source disposed proximate the input side of the lightguide, the optical film having adjacent first and second zones, each zone extending substantially an entire thickness of an optical stack or at least one optical packet of the optical film, light entering the lightguide from the light source propagating within the lightguide and being either reflected or transmitted by the optical film primarily by optical interference, wherein for at least one first incidence angle and at least one wavelength, the first and second zones of the optical film have substantially equal optical transmittance, and for at least one second incidence angle and at least one wavelength, the second zone has substantially greater optical transmittance than the first zone of the optical film.

## Description

### FIELD OF THE INVENTION

This invention relates generally to lighting devices that incorporate optical films whose transmission and reflection characteristics are determined in large part by constructive and destructive interference of light reflected from interfaces between layers disposed within the optical films, i.e., internal to the optical films. The invention also relates to associated systems and methods.

### BACKGROUND

Lightguides facilitate the use of light emitting diodes and/or other solid state lighting devices for many applications including motor vehicle lighting devices. Extraction features allow the guided light to escape from the lightguide. However, because extraction features scatter light, there is a trade-off between extraction efficiency and degree of transparency of the lighting source.

### BRIEF SUMMARY

Some embodiments involve a light source that includes a substantially monochromatic illumination device emitting light at a first wavelength. The light source has an input side proximate the illumination device for receiving light at the first wavelength from the illumination device, a bottom side comprising a diffuse reflector, and a top side. The top side comprises an optical film having a plurality of layers. Each layer extends adjacent first and second zones of the optical film and transmits and reflects light in the at least the first zone primarily by optical interference. At least one layer in the plurality of layers has different birefringence in the first and second zones so that for light at the first wavelength incident at a first incidence angle, each of the first and second zones of the optical film has a substantially greater optical transmittance than reflectance. For light at the first wavelength incident at a greater second incidence angle, the first zone of the optical film has a substantially smaller optical transmittance than reflectance, and the second zone of the optical film has a substantially greater optical transmittance than the first zone of the optical film.

Some embodiments are directed to a light source comprising an optical film that includes a plurality of first and second zones forming a pattern. Each zone transmits and reflects light primarily by optical interference, such that when the light source emits light, a visibility of the pattern increases with increasing viewing angle.

In some embodiments, a light source includes a lightguide comprising a top side comprising an optical film, a bottom side comprising a diffuse reflector, and an input side extending between the top and bottom sides. An illumination source is disposed proximate the input side of the lightguide. The optical film has adjacent first and second zones, each zone extending substantially an entire thickness of an optical stack or at least one optical packet of the optical film. Light entering the lightguide from the light source propagates within the lightguide and is either reflected or transmitted by the optical film primarily by optical interference. For at least one first incidence angle and at least one wavelength, the first and second zones of the optical film have substantially equal optical transmittance. For at least one second incidence angle and at least one wavelength, the second zone has substantially greater optical transmittance than the first zone of the optical film.

Some embodiments are directed to an optical system comprising a retroreflecting layer. An optical film is disposed on the retroreflecting layer and includes a plurality of alternating first and second layers that transmit and reflect light primarily by optical interference.

Some embodiments involve a light source. The light source includes a substantially monochromatic first illumination device configured to emit light at the first wavelength and a substantially monochromatic second illumination device configured to emit light at the first wavelength or at a different second wavelength. The light source has an input side proximate the illumination device for receiving light at the first wavelength from the illumination device, a bottom side comprising a diffuse reflector, and a top side comprising an optical film having a plurality of layers. The optical film transmits and reflects light primarily by optical interference, wherein first illumination device is configured to be activated and emit light for a first function, and the second illumination device is configured to be activated and emit light for a different second function.

Related methods, systems, and articles are also discussed.

These and other aspects of the present application will be apparent from the detailed description below. In no event, however, should the above summaries be construed as limitations on the claimed subject matter, which subject matter is defined solely by the attached claims, as may be amended during prosecution.

### BRIEF DESCRIPTION OF THE DRAWINGS

FIG. 1A is a cross sectional view of a light source incorporating a patterned multilayer optical film in accordance with some embodiments;
FIG. 1B is a cross sectional view of a light source that is similar in some respects to the light source of FIG. 1A and includes a top side comprising a filter;
FIG. 1C is a cross sectional view of a light source that includes lenses arranged adjacent to second zones of the optical film;
FIGS. 1D and 1E are perspective views of the light source of FIG. 1A;
FIG. 1F illustrates an optical film that transmits and reflects light primarily by optical interference disposed over a retroreflector;
FIG. 1 G is a light source with a top side comprising an unpatterned multilayer optical film and a bottom side comprising a retroreflector;
FIG 1H is a light source with a top side comprising a patterned multilayer optical film and a bottom side comprising a retroreflector;
FIG. 2A is a top view of a multilayer optical film having second zones that form a pattern;
FIG. 2B illustrates angle selectivity of light emission through a multilayer optical film;
FIG. 2C illustrates cones of light transmitted through a multilayer optical film;
FIG. 2D illustrates light emission through a multilayer optical film;
FIG. 3 shows graphs of light transmission of an MOF with respect to wavelength for several incidence angles;
FIG. 4 is a schematic side view of a portion of a multilayer optical film;
FIG. 5 is schematic sectional view of a portion of a multilayer optical film;
FIGS. 6A - 6C are photographs illustrating the angle selectivity of the light sources in accordance with some embodiments;
FIG. 7A is a top view of a diffuse reflector that includes a two dimensional pattern;
FIG. 7B is a side cross sectional view of a light source with bottom side having a three dimensional shape wherein the reflector conforms to the three dimensional shape;
FIG. 7C is a side cross sectional view of a light source that includes a patterned layer disposed over the reflector;
FIGS. 8A - 8C are photographs that illustrate a light source having a patterned multilayer optical film and a three dimensional patterned diffuse reflector;
FIGS. 9A - 9E illustrate light sources having multiple illumination devices;
FIGS. 10A - 10C illustrate a light source comprising a three dimensional formed unpatterned multilayer optical film;
FIGS. 10D - 10F illustrate a light source comprising a three dimensional formed patterned multilayer optical film;
FIG. 11 depicts an automobile incorporating at least one of the multilayer optical film embodiments disclosed herein;
FIG. 12 is a photograph illustrating integration of reflector and retroreflector functions in a light source;
FIG. 13A shows a light source as described herein used in a projection system; and
FIG. 13B illustrates a light source as described herein comprising two illumination devices used in a projection system.

The figures are not necessarily to scale. Like numbers used in the figures refer to like components. However, it will be understood that the use of a number to refer to a component in a given figure is not intended to limit the component in another figure labeled with the same number.

### DETAILED DESCRIPTION OF ILLUSTRATIVE EMBODIMENTS

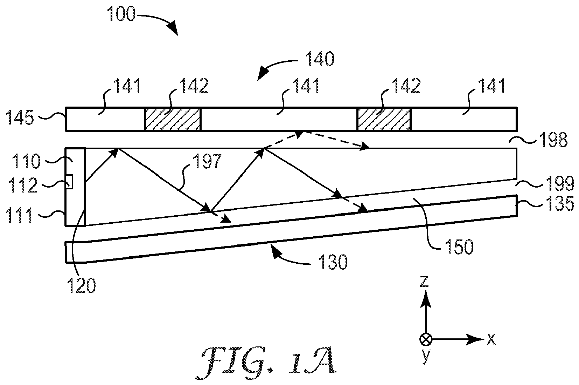

FIG. 1A is a side cross sectional view depicting a light source that incorporates a multilayer optical film in accordance with some embodiments. The light source 100 includes a substantially monochromatic illumination device 110 configured to emit light at a first wavelength. The illumination device 110 is disposed proximate to an input side 120 for receiving light at the first wavelength from the illumination device 110. The light source includes a bottom side 130 comprising a diffuse reflector 135 and a top side 140 comprising a multilayer optical film (MOF) 145. The MOF 145 includes an optical stack of individual layers having different refractive indices so that some light is reflected at interfaces between adjacent layers. These layers, sometimes referred to as "microlayers," are sufficiently thin so that light reflected at a plurality of the interfaces undergoes constructive or destructive interference to give the multilayer optical film the desired reflective or transmissive properties. For multilayer optical films designed to reflect light at ultraviolet, visible, or near-infrared wavelengths, each microlayer generally has an optical thickness (a physical thickness multiplied by refractive index) of less than about 1 µm. However, thicker layers can also be included, such as skin layers at the outer surfaces of the multilayer optical film, or protective boundary layers (PBLs) disposed within the multilayer optical film to separate coherent groupings (known as "stacks" or "packets") of microlayers within the optical stack. In some designs, an optical packet may comprise more than two layers in a repeat unit.

The MOF 145 includes a plurality of layers in an optical stack which may include one or more optical packets, wherein each layer in the optical stack extends adjacent first 141 and second 142 zones of the optical film 145. The layers of the MOF transmit and reflect light in at least the first zone 141 primarily by optical interference. In some embodiments the MOF 145 transmits and reflects light in both the first and the second zones 141, 142 primarily by optical interference. At least one layer in the plurality of layers of the MOF 145 has different birefringence in the first and second zones 141, 142. For light at the first wavelength incident at a first incidence angle, each of the first and second zones 141, 142 of the MOF 145 has a substantially greater optical transmittance than reflectance. For light at the first wavelength incident at a greater second incidence angle, each first zone 141 of the MOF 145 has a substantially smaller optical transmittance than reflectance, and each second zone 142 of the MOF 145 has a substantially greater optical transmittance than the first zone 141.

The light source of FIG. 1A illustrates a wedge solid lightguiding region 150 disposed between a the MOF 145 and diffusive reflector 135. There may be an air gap 198, 199 between the lightguide 150 and the MOF 145 and/or between the lightguide 150 and reflector 135. Light 197 propagates along the lightguiding region 150 and is extracted from the lightguiding region 150 at high angles, e.g., nearly parallel to the surface of the lightguide 150. The angular distribution of the extracted light is dependent on the shape of the lightguide 150. Nearly half of the light is extracted from the top surface of the lightguide 150, and the remaining light is extracted from the bottom surface.

Light extracted from the bottom surface of the lightguiding region 150 is reflected by the diffusive back reflector 135. Due to the optical properties of the multilayer optical film 145, the majority of the light extracted from the top surface of the lightguiding region 150 is reflected back to the diffusive back reflector 135 and recycled to become useful light. Light extracted by the lightguiding region 150 is at high angles, and the multilayer optical film reflects a substantial amount of the high angle light and transmits normally incident light with high efficiency. Thus, the lightguiding region 150 can be made to be optically clear without extraction features. Patterns defined on the bottom side can be viewed with high contrast no matter the illumination devices are on or off.

As discussed herein, patterns can be defined into the multilayer optical film as well.

The first and second zones 141, 142 may be arranged to form a pattern, each zone transmitting and reflecting light primarily by optical interference. When the light source 100 emits light, the visibility of the pattern increases with increasing viewing angle.
The visibility of the pattern increases with increasing viewing angle by virtue of the contrast between the first and second zones 141, 142 increasing with increasing viewing angle.

In some embodiments, each zone 141, 142 extends substantially the entire thickness of the optical stack of the MOF 145 or substantially the entire thickness of at least one optical packet in the optical stack of the MOF 145. The light entering the lightguiding region 150 from the light source 110 propagates within the lightguiding region 150 and is either reflected or transmitted by the optical film 145 primarily by optical interference. For at least one first incidence angle and at least one wavelength, the first and second zones 141, 142 of the optical film 145 have substantially equal optical transmittance. For at least one second incidence angle and at least one wavelength, the second zone 142 has substantially greater optical transmittance than the first zone 141 of the optical film 145.

According to some embodiments, the illumination device 110 includes a back reflector 111 and an illumination source 112 disposed between the back reflector 111 and the input side 120 of the light source 100. The illumination source 112 may comprise at least one of a lamp, a cold cathode tube, a light emitting diode (LED), an organic light emitting diode (OLED), a laser, and a vertical cavity surface-emitting laser (VCSEL), for example. According to some implementations, the illumination device 110 emits light of the first wavelength that is in the visible wavelength region of the electromagnetic radiation spectrum. For example, the first wavelength may be in the blue, yellow, amber, green, or red wavelength region of the electromagnetic radiation spectrum. The illumination device 110 may be configured to emit the blue, yellow, amber, green, or red light.

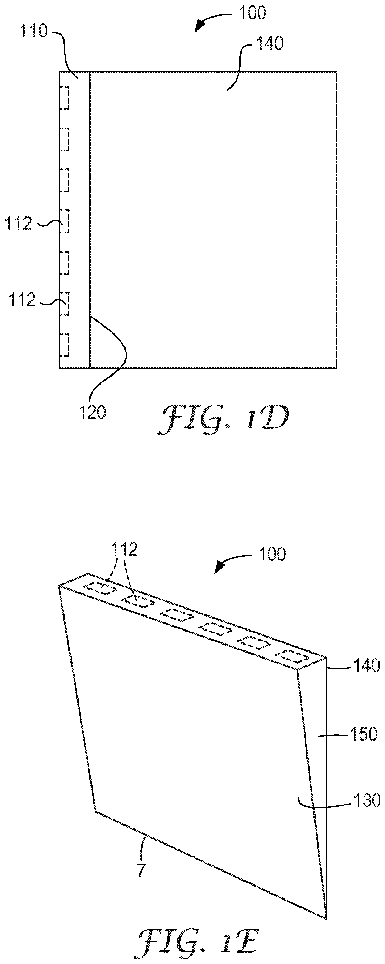

FIGS. 1D and 1E provide top and perspective views of the light source 100. As illustrated in FIGS. 1D and 1E, the illumination device may comprise multiple illumination sources 112 arranged along the input side 120 of the light source 100. The multiple illumination sources 112 can be selected to emit monochromatic light at the first wavelength.

The light source is arranged so that the input side 120, the bottom side 130 and the top side 140 define a lightguiding region 150 therebetween. According to some aspects, the lightguiding region 150 may be a solid light guiding region. According to other aspects, the lightguiding region 150 may be a hollow lightguiding region. Optionally, and as illustrated in FIG. 1A, the separation between the top 140 and bottom 130 sides decreases along a length of the light source 100. In some implementations this decrease in separation also corresponds to the separation between the multilayer optical film 145 and the diffuse reflector 135 which also decreases along a length of the light source 100.

The bottom side 130 of the light source 100 includes a diffuse reflector 135, which may comprise primarily a diffuse surface reflector or may primarily comprise a diffuse volume reflector. In some implementations, the diffuse reflector 135 is a retroreflector such that the light source 100 includes a retroreflector layer disposed between the top and bottom sides 140, 130. In various embodiments, the retroreflector may be or comprise a prismatic retroreflector, a plurality of cube-corner elements, a lens-mirror retroreflector, and/or a plurality of spherical beads.

There may be an air gap disposed between the MOF 145 and the lightguiding region and/or between the diffuse reflector and the lightguiding region.

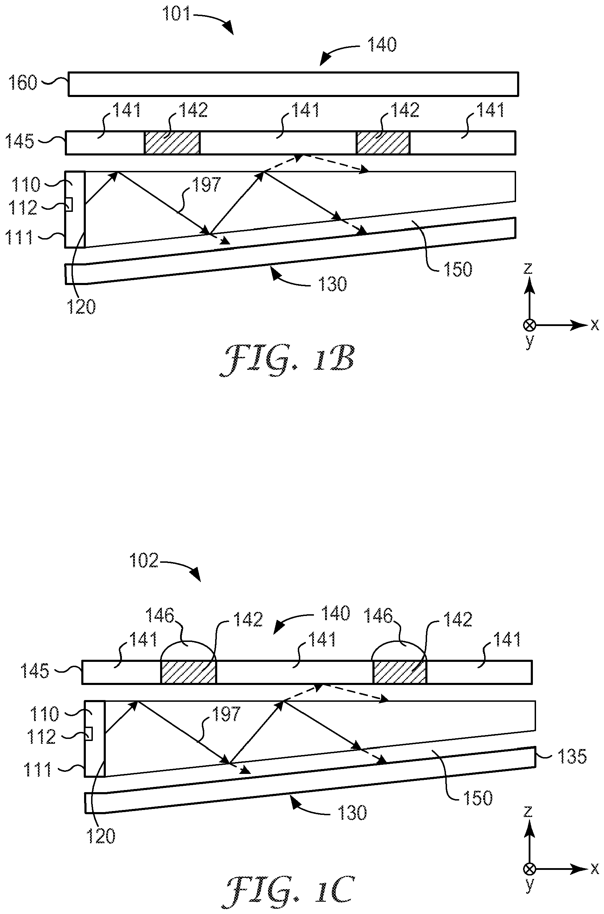

FIG. 1B is a side cross sectional view of a light source 101 that is similar in many respects to the light source 100 shown in FIG. 1A, where like reference numbers refer to like components. The light source 101 of FIG. 1B includes an optional filter layer 160 disposed along the MOF 145. Configurations incorporating a filter layer 160 may be useful in car signaling implementations, wherein the filter 160 allows red and/or amber light to be emitted from the light source 101.

FIG. 1 C is a side cross sectional view of a light source 102 that is similar in many respects to the light source 100 shown in FIG. 1A, where like reference numbers refer to like components. As illustrated by FIG. 1C, the multilayer optical film 145 includes at least one optical lens 146 disposed over at least one second zone 142 of the MOF 145. The optical lens 146 may be disposed on and aligned with the second zone 142 and configured to change a direction of light at the first wavelength transmitted by the second zone 142 of the multilayer optical film. In some implementations, the multilayer optical film 145 includes a plurality of spaced apart second zones 142, each second zone 142 corresponds to and is aligned with a different optical lens 146. The optical lenses 146 change a direction of light at the first wavelength that is transmitted by the second zone. In various embodiments, the lenses may extend over the first zones, over both the first and second zones, or over a portion of the first and/or over a portion of the second zones.

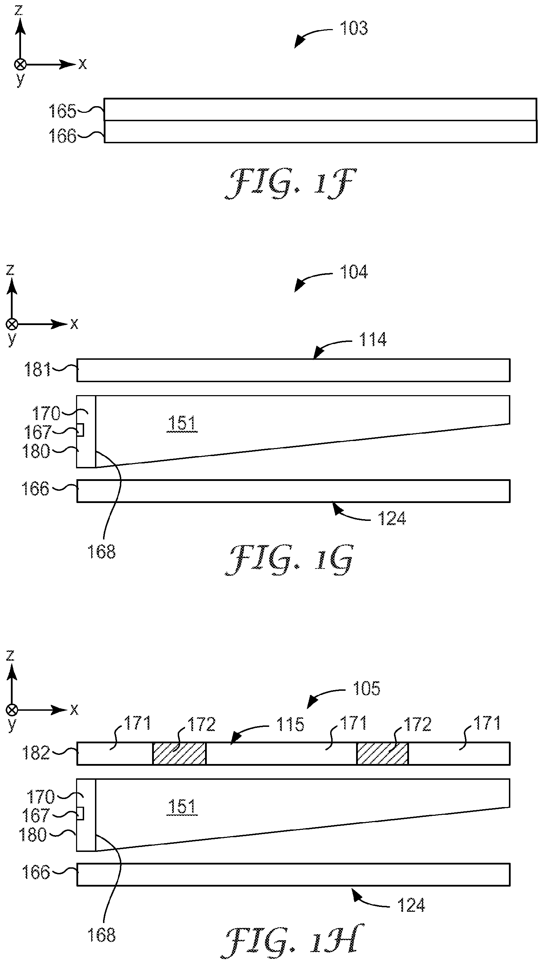

As shown in the cross sectional view of FIG. 1F, some embodiments involve an optical system 103 comprising a retroreflecting layer 166 and a multilayer optical film 165 disposed on or over the retroreflecting layer 166. The layer 166 may be discontinuously retroreflective. For example, layer 166 may be retroreflective in some regions, but not in other regions. There may be, but need not be, an air gap and/or a lightguiding region between the retroreflective layer 166 and the multilayer optical film 165. The multilayer optical film 165 comprises a plurality of alternating first and second layers that transmit and reflect light of a first wavelength primarily by optical interference. The retroreflecting layer 166 retroreflects light that is incident on the retroreflecting layer 166 from the multilayer optical film side of the optical system 103. In various embodiments, the retroreflector 166 may be or comprise a prismatic retroreflector, a plurality of cube-corner elements, a lens-mirror retroreflector, and/or a plurality of spherical beads.

In general, the color of light reflected by the retroreflective layer 165 of system 103 is dependent on the viewing angle of the light reflected by the retroreflective layer 165 transmitted through the unpatterned or patterned multilayer optical film 165. The color of light is independent of the viewing angle of the light reflected by the retroreflective layer 166 and transmitted through the patterned zones of the multilayer optical film 165.

The optical system 103 can provide for various color combinations if the multilayer optical film includes multiple optical packets. In an exemplary two optical packet system, a first optical packet may be reflective for light at an angle of incidence normal to the film having wavelengths in a first wavelength range and a second optical packet reflective for light at an angle of incidence normal to the film in a second wavelength range different from the first wavelength range. Each of the optical packets may be separately patterned or unpatterned.

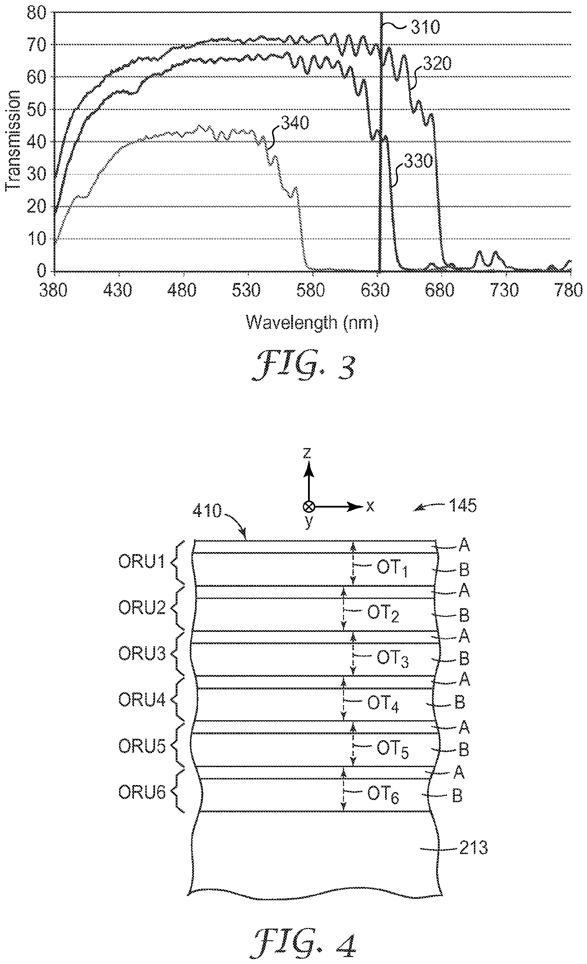

Table 1 lists colors reflected by optical systems, similar to system 103 shown in FIG. 1F, having a multilayer optical film that is reflective for wavelengths greater than 680 nm for incident light normal to the film surface. The transmission characteristics for this film are discussed with reference to FIG. 3. Table 1 also lists colors reflected by optical systems, similar to system 103 shown in FIG. 1F, having a multilayer optical film that includes two optical packets: a first optical packet is reflective for light having wavelengths greater than 680 nm and incident normal to the film surface and the second optical packet is reflective for light having wavelengths less than 600 nm and incident normal to the film surface. Table 1 lists colors for the unpatterned (first zone) and patterned (second zone) regions of the multilayer optical film and for outer layer (lens) that is clear or red. The results tabulated in Table 1 assume an optical system as shown in FIG. 1F with white light normally incident on the multilayer optical film and that any space or air gap between the multilayer optical film and the retroreflective layer is negligible.

**Table 1**

| Outer lens color /viewing angle | Single packet system MOF Optical film reflective at wavelengths greater than 680 nm | | Two packet system MOF (first packet reflective at greater than 680 nm and second packet reflective at less than 600 nm) | | |
|---|---|---|---|---|---|
| | Unpatterned | Patterned | Unpatterned | >680 nm Patterned | <600 nm Patterned |
| Clear/normal | white | white | white or red | white or red | white |
| Clear/off normal axis | cyan | white | green | yellow | Cyan |
| Red/normal | red | red | red | red | red |
| Red/off normal axis | dark | red | dark | red | dark |

In some embodiments, the optical system may be a light source including an illumination device and a lightguiding region, as illustrated by side cross sectional views of light sources 104 and 105 of FIGS. 1G and 1H, respectively. The light source 104, 105 includes an illumination device 170 comprising an illumination source 167 which can be disposed between the retroreflecting layer 166 and the multilayer optical film 181, 182. As illustrated in FIGS. 1G and 1H, the light source 104, 105 may include an input side 168 extending between the retroreflecting layer 166 and the multilayer optical film 181, 182 wherein the illumination source 167 is disposed proximate the input side 168.

In some cases, the illumination device 170 includes a back reflector 180 and the illumination source 167 is arranged between the back reflector 180 and the input side 168 of the light source 104, 105. As previously discussed, the illumination source 167 may comprise at least one of a lamp, a cold cathode tube, a light emitting diode (LED), an organic light emitting diode (OLED), a laser, and a vertical cavity surface-emitting laser (VCSEL), for example. The illumination device 170 may be configured to emit monochromatic light of a first wavelength that is in the visible wavelength region of the electromagnetic radiation spectrum. For example, the first wavelength may be in the blue, yellow, amber, green, or red wavelength region of the electromagnetic radiation spectrum and the illumination device 170 may be configured to emit the blue, yellow, amber, green, or red light.

The light source 104, 105 can be arranged so that the input side 168, the bottom side 124, 125 and the top side 114, 115 define a lightguiding region 151 therebetween. As previously discussed in connection with FIG. 1A, the lightguiding region 151 may be solid or hollow. In some configurations the separation between the top and bottom sides decreases along a length of the light source. In some implementations this decrease in separation also corresponds to the separation between the multilayer optical film and the retroreflecting layer which decreases along a length of the light source.

According to some implementations, illustrated by FIG. 1H, each layer of the multilayer optical film 182 extends adjacent first 171 and second 172 zones of the multilayer optical film 182. At least one layer in the plurality of layers of the multilayer optical film 182 has different birefringence in the first 171 and second 172 zones. According to some implementations, illustrated by FIG. 1G, the multilayer optical film 181 may be unpatterned.

A plurality of first and second zones 171, 172 may be arranged to form a pattern, each zone transmitting and reflecting light primarily by optical interference. When the light source 105 emits light, the visibility of the pattern increases with increasing viewing angle.
For example, the visibility of the pattern increases with increasing viewing angle by virtue of the contrast between the first and second zones 171, 172 increasing with increasing viewing angle.

In some embodiments, each zone 171, 172 extends substantially an entire thickness of one or more optical packets of the multilayer optical film 145 or extends substantially an entire thickness of the multilayer optical film 145. The light entering the lightguiding region 151 from the light source 105 propagates within the lightguiding region 151 and is either reflected or transmitted by the multilayer optical film 182 primarily by optical interference. For at least one first incidence angle and at least one wavelength, the first and second zones 171, 172 of the multilayer optical film 182 have substantially equal optical transmittance. For at least one second incidence angle and at least one wavelength, the second zone 172 has substantially greater optical transmittance than the first zone 171 of the multilayer optical film 182.

In one example, the light source 105 can be arranged so that the pattern formed by the second zones 172 is observable when the viewing angle is off axis with respect to the axis normal to the plane of the multilayer optical film 182. The retroreflecting layer 166 may also be patterned with a 2 dimensional or 3 dimensional pattern. When light is incident on the retroreflecting layer 166 from the multilayer optical film side of the light source 105 and the incident light and the viewing axis is normal (or close to normal) to the plane of the multilayer optical film 182 and retroreflecting layer 166 (the x-y plane in FIG. 1H), a pattern of the retroreflecting layer 124 is visible when viewed along the normal axis, and the pattern formed by the second zones 172 of the multilayer optical film 182 is not substantially visible.

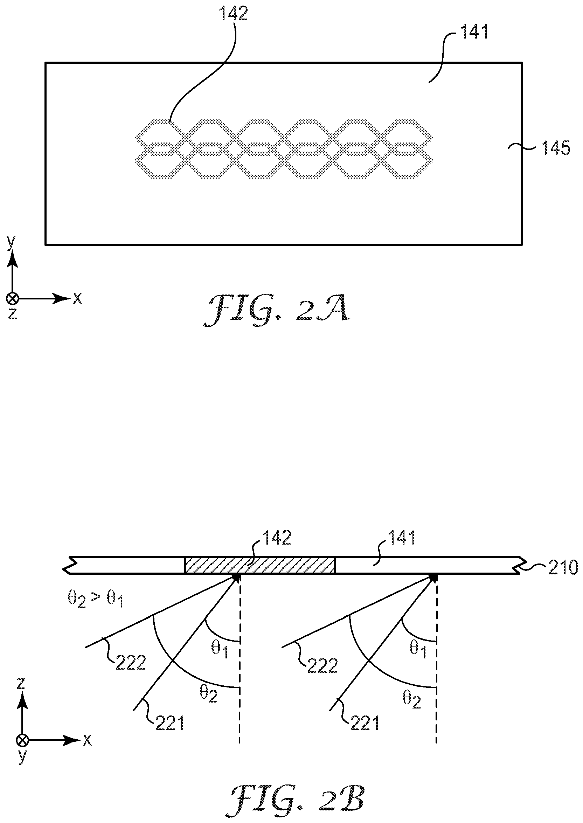

FIGS. 2A and 2B illustrate in more detail a multilayer optical film 145, as previously discussed in connection with FIGS. 1A, 1B, 1C, and 1H, for example. FIG. 2A provides a top view of a multilayer optical film 145 that includes at least one first zone 141 and one or more second 142 zones, wherein the second zones 142 form a pattern. The first zones are also referred to herein as "unpatterned zones" or "unpatterned MOF" and the second zones are also referred to herein as "patterned zones" or "patterned MOF." In some implementations, the pattern formed by the second zones 142 may be a regular pattern, as shown in FIG. 2A. The pattern of the second zones may form at least one of an indicia, a letter, a word, an alphanumeric, a symbol, a logo, a text, a picture, and an image.

FIG. 2B shows in cross section a portion of multilayer optical film 145 including a first zone 141 and a second zone 142. The multilayer optical film 145 is multilayer optical film that includes a plurality of layers, each layer extending adjacent the first and second zones 141, 142. Each layer transmits and reflects light in at least the first zone 141 primarily by optical interference. In some embodiments the MOF 145 transmits and reflects light in both the first and the second zones 141, 142 primarily by optical interference. At least one layer in the plurality of layers of the MOF 145 has different birefringence in the first and second zones 141, 142. In some embodiments, each zone 141, 142 extends substantially an entire thickness (along the z direction) of an optical packet of the multilayer optical film 145 or an entire thickness of the optical stack of multilayer optical film 145.

FIG. 2B shows light of a first wavelength which is incident on the multilayer optical film 145 at a first incidence angle, θ₁, represented by arrow 221. In some embodiments, each of the first and second zones 141, 142 of the MOF 145 has a substantially greater optical transmittance than reflectance for the light 221. For light 221 of the first wavelength and incidence angle θ₁,
T₁ > R₁, and
T₂ > R₂,
where T₁ is the transmittance of the first zone, R₁ is the reflectance of the first zone, T₂ is the transmittance of the second zone, and R₂ is the reflectance of the second zone.
FIG. 2B shows light of a first wavelength which is incident on the multilayer optical film 145 at a second incidence angle, θ₂ > θ₁ represented by arrow 222. For light 222 at the first wavelength incident at θ₂, the first zone 141 of the MOF 145 has a substantially smaller optical transmittance than reflectance, and the second zone 142 of the MOF 145 has a substantially greater optical transmittance than the first zone 141. For light of the first wavelength and incidence angle θ₂,
T₁ < R₁, and
T₂ >T₁.

In some embodiments, for light 221 for at least one wavelength and at least one incidence angle, θ₁, the first and second zones 141, 142 of the multilayer optical film 145 have substantially equal optical transmittance, T₁ ≈ T₂. For light 222 at the at least one wavelength at a second incidence angle, θ₂, the second zone 142 has substantially greater optical transmittance than the first zone 141, T₂ > T₁.

Thus, for light incident on the multilayer optical film as shown in FIG. 2B, the visibility of the pattern formed by the second zones 142 increases with increasing viewing angle. When the multilayer optical film 145 shown in FIGS. 2A and 2B is used in an operating light source (see, e.g., FIG. 1A), the second zone 142 is more visible when viewed along the second incidence angle θ₂ than along the first incidence angle θ₁. When the light source is operating and when viewed along the second incidence angle, θ₂, in the absence of ambient light, the second zone 142 is substantially brighter than the first zone 141.

According to some implementations, the first incidence angle, θ₁, is less than about 10 degrees and the second incidence angle, θ₂, is greater than about 40 degrees. For light at the first wavelength incident at incidence angles less than about 10 degrees each of the first and second zones 141, 142 of the multilayer optical film 145 has a substantially greater optical transmittance than reflectance. In some implementations, for light at the first wavelength incident at a range of second incidence angles from about 40 to 70 degrees, the first zone 141 of the multilayer optical film has a substantially smaller optical transmittance than reflectance, and the second zone 142 of the multilayer optical film 145 has a substantially greater optical transmittance than reflectance.

According to some embodiments, for light at the first wavelength incident at the first incidence angle θ₁, each of the first and second zones 141, 142 of the multilayer optical film 145 has a greater optical transmittance than reflectance by at least 50%, i.e., T₁ > 1.5 R₁ and T₂ > 1.5R₂. In some embodiments, for light at the first wavelength incident at the second incidence angle θ₂, the first zone 141 of the multilayer optical film 145 has a smaller optical transmittance than reflectance by at least 50%, i.e., T₁ < 0.5 R₁. In some embodiments, for light at the first wavelength incident at the second incidence angle θ₂, the second zone 142 of the multilayer optical film 145 has a greater optical transmittance than the first zone of the multilayer optical film by at least 30%, i.e., T₂ > 1.3T₁.

In some embodiments, for light at the first wavelength incident at the second incidence angle θ₂, the second zone 142 of the multilayer optical film 145 has a substantially greater optical transmittance than reflectance, i.e., T₂ > R₂. In some embodiments, for light at the first wavelength incident at the second incidence angle θ₂, the second zone 142 of the multilayer optical film 145 has an optical transmittance that is greater than the reflectance in the second zone 142 by at least 30%, i.e., T₂ > 1.3R₂.

In some implementations, the second zone 142 of the multilayer optical film 145 may be optically diffusive. For example, the second zone 142 of the multilayer optical film 145 may be more optically diffusive than the first zone 141 of the multilayer optical film 145.

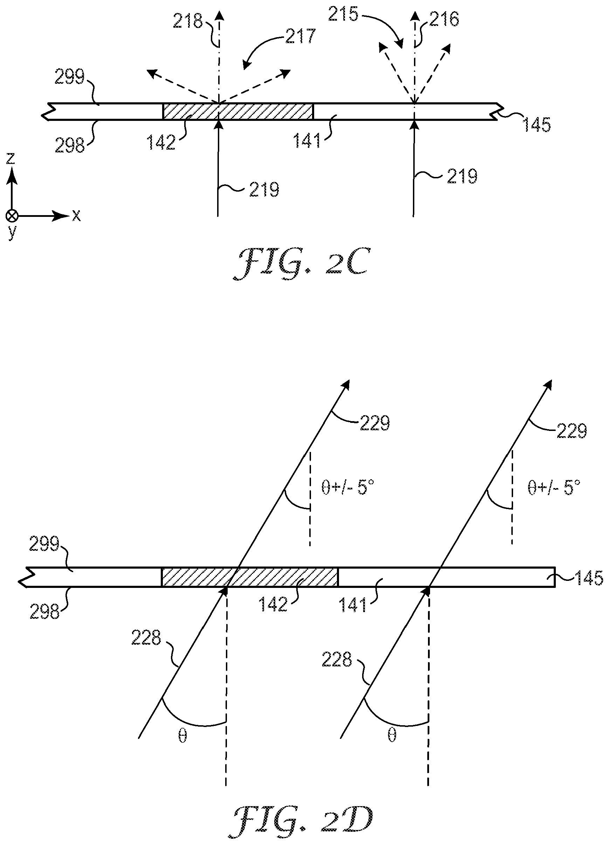

FIG. 2C illustrates light emitted through the multilayer optical film 145 when the multilayer optical film 145 is used in a light source, such as light source 100 of FIG. 1A. Light 219 from the illumination device (not shown in FIG. 2C) is incident on surface 298 of the multilayer optical film 145. The light source emits light from surface 299 in cone 215 of light at the first wavelength from a region of the first zone 141, the cone 215 of light propagating along a central direction 216 substantially normal to the region with an angular full width at half maximum intensity of about 30 degrees. A cone 217 of light at the first wavelength is emitted at surface 299 from a region of the second zone 142 , the cone 217 of light propagating along a central direction substantially normal to the region with an angular full width at half maximum intensity of about 70 degrees.

FIG. 2D illustrates light emission from a multilayer optical film used in a light source, such as light source 100 shown in FIG. 1A. Light from the illumination device (not shown in FIG. 2D, but shown in FIG. 1A) is extracted through the multilayer optical film without changing the direction of the light from surface 298 to surface 299 of the multilayer optical film. Each light ray (indicated by arrow 228) emitted from the monochromatic lamp and incident on surface 298 of the top side along an incidence direction that is transmitted by the top side exits the light source as a light ray (indicated by arrow 229) having a transmitted direction that is substantially along the incidence direction of light ray 228. For example, in some configurations, the transmitted direction deviates from the incidence direction by less than 5 degrees. Thus, if the angle of incidence on surface 298 is θ, as illustrated in FIG. 2D, the emission direction is θ ± about 5°. In this regard, the top side of the light source comprising the multilayer optical film 145 transmits light primarily by virtue of the optical interference of the multilayer optical film 145 and not a change in light direction. As such, light may be extracted from the multilayer optical film 145 without requiring the use of light extraction features that cause a change in direction of the light.

The multilayer optical films disclosed herein are angle selective for substantially monochromatic light. The band edge of the multilayer optical film may be arranged with respect to the peak wavelength emitted by the illumination device to achieve incidence angle selectivity. For example, FIG. 3 is a graph having a line 310 that corresponds to the central wavelength emitted by the illumination device. FIG. 3 also shows a graph 320 of light transmission of an MOF with respect to wavelength for light that is incident on the multilayer optical film at an angle normal to the plane of the multilayer optical film; a graph 330 of light transmission with respect to wavelength for light that is incident on the multilayer optical film at an angle 30 degrees off axis from the normal direction; and a graph 340 of light transmission with respect to wavelength for light that is incident on the multilayer optical film at an angle 60 degrees off axis from the normal direction.

The MOF of FIG. 3 has high transmission of about 70% at 632 nm (the central wavelength of the illumination device) for normally incident light. The MOF band shifts to shorter wavelength for off-axis incident light, therefore its transmission at 632 nm drops to 40% at 30 degrees off normal axis, and to almost 0 at 60 degrees off normal axis. Therefore, the MOF illustrated in FIG. 3 lets normally incident light pass with high efficiency while recycling off-axis light, and enables a light source having an edge-lit lightguide with good uniformity for substantially monochromatic light.
Referring back to FIG. 2A, the MOFs described herein (such as MOF 145) may be internally patterned or spatially tailored using spatially selective birefringence reduction of at least some of the internal layers. The internal patterning defines distinct first 141 and second 142 zones. The pattern is visible because the different zones have different transmission and reflection characteristics. In the depicted embodiment, zone 141 has a first transmission characteristic and a first reflection characteristic and zone 142 has a second transmission characteristic and a second reflection characteristic. In general, transmission (T) plus reflection (R) plus absorption (A) = 100%, or T + R + A = 100%. In some embodiments the MOF is composed entirely of materials that have low absorption over at least a portion of the wavelength spectrum. Thus, in many cases the MOF 145 may have an absorption that is small or negligible over at least a limited portion of the wavelength spectrum, such as the visible spectrum, in which case the reflection and transmission over that limited range take on a complementary relationship because T + R = 100% - A. In some cases A is negligible and the approximation T + R ≈ 100% can be made. This approximation provides the relationship between the transmission and reflection (T = R - 100%). In some cases A is similar in the first and second zones so that discussion about reflection is also applicable to transmission in the approximate sense, notwithstanding deviations in A between zones or with wavelength. Thus, the discussion below only refers to the reflection characteristics of the zones since the transmission characteristics can be ascertained based on the reflection characteristics.

In various embodiments, the first and second reflection characteristics are each the result of structural features that are internal to the MOF 145, rather than the result of coatings applied to the surface of the MOF 145 or other surface features. The first and second reflection characteristics differ in some way that is perceptible under at least some viewing conditions to permit detection of the pattern by an observer or by a machine. In some cases it may be desirable to maximize the difference between the first and second reflection characteristics at visible wavelengths so that the pattern is conspicuous to human observers under most viewing and lighting conditions. In other cases it may be desirable to provide only a subtle difference between the first and second reflection characteristics, or to provide a difference that is conspicuous only under certain viewing conditions. In any case the difference between the first and second reflection characteristics may be attributable primarily to a difference in the refractive index properties of interior layers of the MOF 145 in the different neighboring zones 141, 142 of the MOF 145, and is not primarily attributable to differences in thickness between the neighboring zones 141, 142.

The zone-to-zone differences in refractive index can produce various differences between the first and second reflection characteristics depending on the design of the MOF. In some cases the first reflection characteristic may include a first reflection band with a given center wavelength, band edge, and maximum reflectivity, and the second reflection characteristic may differ from the first by having a second reflection band that is similar in center wavelength and/or band edge to the first reflection band, but that has a substantially different maximum reflectivity (whether greater or lesser) than the first reflection band, or the second reflection band may be substantially absent from the second reflection characteristic. These first and second reflection bands may be associated with light of only one polarization state, or with light of any polarization state depending on the design of the film.

As previously discussed, the first and second reflection characteristics may differ in their dependence with viewing angle. For example, the first reflective characteristic may include a first reflection band that has a given center wavelength, band edge, and maximum reflectivity at normal incidence, and the second reflective characteristic may include a second reflection band that is very similar to these aspects of the first reflection band at normal incidence. With increasing incidence angle, however, although both the first and second reflection bands may shift to shorter wavelengths, their respective maximum reflectivities may deviate from each other greatly. For example, the maximum reflectivity of the first reflection band may remain constant or increase with increasing incidence angle, while the maximum reflectivity of the second reflection band, or at least the p-polarized component thereof, may decrease with increasing incidence angle.

In cases where the differences discussed above between the first and second reflective characteristics relate to reflection bands that cover a portion of the visible spectrum, the differences may be perceived as differences in color between the first and second zones of the film.

Turning now to FIG. 4, a portion of a multilayer film 145 is illustrated in schematic side view to reveal the structure of the film including its interior layers. The film 145 is shown in relation to a local x-y-z Cartesian coordinate system, where the film extends parallel to the x- and y-axes, and the z-axis is perpendicular to the film and its constituent layers and parallel to a thickness axis of the film. Note that the film 145 need not be flat, but may be curved or otherwise shaped to deviate from a plane, and even in those cases arbitrarily small portions or regions of the film can be associated with a local Cartesian coordinate system as shown. The film 145 may in general be considered to represent the film 145 in any of its zones 141, 142 since the individual layers of the film 145 preferably extend continuously from each such zone to the next.

As previously discussed, multilayer optical films include individual layers or "microlayers," having different refractive indices so that some light is reflected at interfaces between adjacent layers. These layers are sufficiently thin so that light reflected at a plurality of the interfaces undergoes constructive or destructive interference to give the multilayer optical film the desired reflective or transmissive properties. For multilayer optical films designed to reflect light at ultraviolet, visible, or near-infrared wavelengths, each microlayer generally has an optical thickness (a physical thickness multiplied by refractive index) of less than about 1 µm. In some embodiments, thicker layers can also be included, such as skin layers at the outer surfaces of the multilayer optical film, or protective boundary layers (PBLs) disposed within the multilayer optical film to separate coherent groupings (known as "stacks" or "packets") of microlayers. In FIG. 4, the microlayers are labeled "A" or "B", the "A" layers being composed of one material and the "B" layers being composed of a different material, these layers being stacked in an alternating arrangement to form optical repeat units or unit cells ORU 1, ORU 2, ... ORU 6 as shown. In some embodiments, the optical stack or one or more of the optical packets may comprise more than two layers in a repeat unit. In some embodiments, the optical stack or an optical packet may comprise more than two different alternating materials.

Typically, a multilayer optical film composed entirely of polymeric materials would include many more than 6 optical repeat units if high reflectivities are desired. Note that all of the "A" and "B" microlayers shown in FIG. 4 are interior layers of film 145, except for the uppermost "A" layer whose upper surface in this illustrative example coincides with the outer surface 410 of the film 145. The substantially thicker layer 213 at the bottom of FIG. 4 can represent an outer skin layer, or a protective boundary layer (PBL) that separates the stack of microlayers shown in the figure from another stack or packet of microlayers (not shown). If desired, two or more separate multilayer optical films can be laminated together, e.g. with one or more thick adhesive layers, or using pressure, heat, or other methods to form a laminate or composite film.

The microlayers can have thicknesses and refractive index values corresponding to a ¼-wave stack, i.e., arranged in optical repeat units each having two adjacent microlayers of equal optical thickness (f-ratio = 50%, the f-ratio being the ratio of the optical thickness of a constituent layer "A" to the optical thickness of the complete optical repeat unit), such optical repeat unit being effective to reflect by constructive interference light whose wavelength λ is twice the overall optical thickness of the optical repeat unit, where the "optical thickness" of a body refers to its physical thickness multiplied by its refractive index. In the embodiment of FIG. 4, the "A" layers are depicted for generality as being thinner than the "B" layers, but nevertheless each optical repeat unit (ORU 1, ORU 2, etc.) still has an optical thickness (OT₁, OT₂, etc.) equal to the sum of the optical thicknesses of its constituent "A" and "B" layer, and each optical repeat unit reflects light whose wavelength λ is twice its overall optical thickness.

In some embodiments, the optical thicknesses of the optical repeat units in a layer stack may all be equal to each other, to provide a narrow reflection band of high reflectivity centered at a wavelength equal to twice the optical thickness of each optical repeat unit. In other embodiments, the optical thicknesses of the optical repeat units may differ according to a thickness gradient along the z-axis or thickness direction of the film, whereby the optical thickness of the optical repeat units increases, decreases, or follows some other functional relationship as one progresses from one side of the stack (e.g. the top) to the other side of the stack (e.g. the bottom). Such thickness gradients can be used to provide a widened reflection band to provide substantially spectrally flat transmission and reflection of light over the extended wavelength band of interest, and also over all angles of interest.

For polymeric multilayer optical films, reflection bands can be designed to have sharpened band edges as well as "flat top" reflection bands, in which the reflection properties are essentially constant across the wavelength range of application. Other layer arrangements, such as multilayer optical films having 2-microlayer optical repeat units whose f-ratio is different from 50%, or films whose optical repeat units include more than two microlayers, are also contemplated. These alternative optical repeat unit designs can be configured to reduce or to excite certain higher-order reflections, which may be useful if the desired reflection band resides in or extends to near infrared wavelengths.

Adjacent microlayers of the multilayer optical film have different refractive indices so that some light is reflected at interfaces between adjacent layers. The refractive indices of one of the microlayers (e.g. the "A" layers in FIG. 4) for light polarized along principal x-, y-, and z-axes are referred to as n1x, n1y, and n1z, respectively. The refractive indices of the adjacent microlayer (e.g. the "B" layers in FIG. 4) along the same axes are referred to as n2x, n2y, n2z, respectively. The differences in refractive index between these layers are referred to as Δnx ( = n1x - n2x) along the x-direction, Δny ( = n1y - n2y) along the y-direction, and Δnz ( = n1z - n2z) along the z-direction. The nature of these refractive index differences, in combination with the number of microlayers in the film (or in a given stack of the film) and their thickness distribution, controls the reflective and transmissive characteristics of the film (or of the given stack of the film) in a given zone. For example, if adjacent microlayers have a large refractive index mismatch along one in-plane direction (Δnx large) and a small refractive index mismatch along the orthogonal in-plane direction (Δny ≈ 0), the film or packet may behave as a reflective polarizer for normally incident light. In this regard, a reflective polarizer may be considered for purposes of this application to be an optical body that strongly reflects normally incident light that is polarized along one in-plane axis (referred to as the "block axis") if the wavelength is within the reflection band of the packet, and strongly transmits such light that is polarized along an orthogonal in-plane axis (referred to as the "pass axis"). "Strongly reflects" and "strongly transmits" may have slightly different meanings depending on the intended application or field of use, but in many cases a reflective polarizer will have at least 70, 80, or 90% reflectivity for the block axis, and at least 70, 80, or 90% transmission for the pass axis.

In another example, adjacent microlayers may have a large refractive index mismatch along both in-plane axes (Δnx large and Δny large), in which case the film or packet may behave as an on-axis mirror. In this regard, a mirror or mirror-like film may be considered for purposes of this application to be an optical body that strongly reflects normally incident light of any polarization if the wavelength is within the reflection band of the packet. Again, "strongly reflecting" may have slightly different meanings depending on the intended application or field of use, but in many cases a mirror will have at least 70, 80, or 90% reflectivity for normally incident light of any polarization at the wavelength of interest. In variations of the foregoing embodiments, the adjacent microlayers may exhibit a refractive index match or mismatch along the z-axis (Δnz ≈ 0 or Δnz large), and the mismatch may be of the same or opposite polarity or sign as the in-plane refractive index mismatch(es). Such tailoring of Δnz plays a key role in whether the reflectivity of the p-polarized component of obliquely incident light increases, decreases, or remains the same with increasing incidence angle. In yet another example, adjacent microlayers may have a substantial refractive index match along both in-plane axes (Δnx ≈ Δny ≈ 0) but a refractive index mismatch along the z-axis (Δnz large), in which case the film or packet may behave as a so-called "p-polarizer", strongly transmitting normally incident light of any polarization, but increasingly reflecting p-polarized light of increasing incidence angle if the wavelength is within the reflection band of the packet.

In view of the large number of permutations of possible refractive index differences along the different axes, the total number of layers and their thickness distribution(s), and the number and type of microlayer packets included in the multilayer optical film, the variety of possible multilayer optical films 145 and packets thereof is vast.

At least some of the microlayers in at least one packet of the multilayer optical film are birefringent in at least one zone of the film (e.g., at least one of zones 141, 142 of FIG. 2A). Thus, a first layer in the optical repeat units may be birefringent (i.e., n1x ≠ n1y, or n1x ≠ n1z, or n1y ≠ n1z), or a second layer in the optical repeat units may be birefringent (i.e., n2x ≠ n2y, or n2x ≠ n2z, or n2y ≠ n2z). Moreover, the birefringence of such layers is diminished in at least one zone relative to a neighboring zone. In some cases, the birefringence of these layers may be diminished to zero, such that they are optically isotropic (i.e., n1x = n1y = n1z, or n2x = n2y = n2z) in one of the zones but birefringent in a neighboring zone.

Exemplary multilayer optical films are composed of polymer materials and may be fabricated using coextruding, casting, and orienting processes. In brief summary, the fabrication method may comprise: (a) providing at least a first and a second stream of resin corresponding to the first and second polymers to be used in the finished film; (b) dividing the first and the second streams into a plurality of layers using a suitable feedblock, such as one that comprises: (i) a gradient plate comprising first and second flow channels, where the first channel has a cross-sectional area that changes from a first position to a second position along the flow channel, (ii) a feeder tube plate having a first plurality of conduits in fluid communication with the first flow channel and a second plurality of conduits in fluid communication with the second flow channel, each conduit feeding its own respective slot die, each conduit having a first end and a second end, the first end of the conduits being in fluid communication with the flow channels, and the second end of the conduits being in fluid communication with the slot die, and (iii) optionally, an axial rod heater located proximal to said conduits; (c) passing the composite stream through an extrusion die to form a multilayer web in which each layer is generally parallel to the major surface of adjacent layers; and (d) casting the multilayer web onto a chill roll, sometimes referred to as a casting wheel or casting drum, to form a cast multilayer film. This cast film may have the same number of layers as the finished film, but the layers of the cast film are typically much thicker than those of the finished film. Furthermore, the layers of the cast film are typically all isotropic. Many alternative methods of fabricating the cast multilayer web can also be used.

After cooling, the multilayer web can be drawn or stretched to produce the near-finished multilayer optical film. The drawing or stretching accomplishes two goals: it thins the layers to their desired final thicknesses, and it orients the layers such that at least some of the layers become birefringent. The orientation or stretching can be accomplished along the cross-web direction (e.g. via a tenter), along the down-web direction (e.g. via a length orienter), or any combination thereof, whether simultaneously or sequentially. If stretched along only one direction, the stretch can be "unconstrained" (wherein the film is allowed to dimensionally relax in the in-plane direction perpendicular to the stretch direction) or "constrained" (wherein the film is constrained and thus not allowed to dimensionally relax in the in-plane direction perpendicular to the stretch direction). If stretched along both in-plane directions, the stretch can be symmetric, i.e., equal along the orthogonal in-plane directions, or asymmetric. Subsequent or concurrent draw reduction, stress or strain equilibration, heat setting, and other processing operations can also be applied to the film.

The multilayer optical films and film bodies can also include additional layers and coatings selected for their optical, mechanical, and/or chemical properties. For example, a UV absorbing layer can be added at one or both major outer surfaces of the film to protect the film from long-term degradation caused by UV light. Additional layers and coatings can also include scratch resistant layers, tear resistant layers, and stiffening agents.

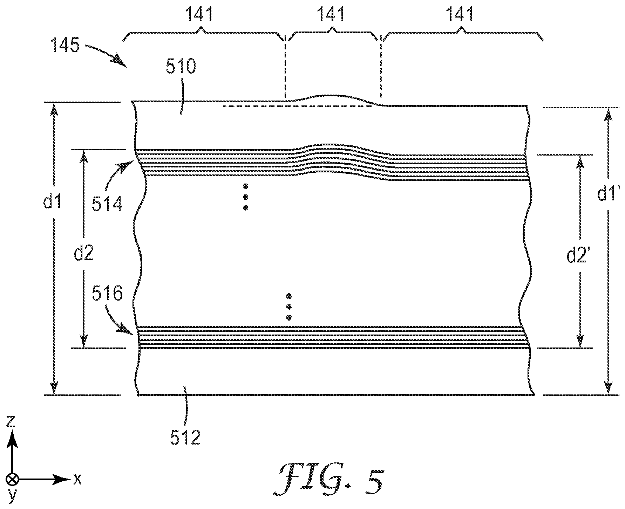

FIG. 5 shows a schematic sectional view of a portion of the multilayer optical film 145 of FIG. 2 at a boundary of zone 141 and zone 142. In this expanded view of the film 145, a narrow transition zone 143 can be seen separating the zone 141 from the neighboring zone 142. Such a transition zone may or may not be present depending on processing details, and if it is not present then zone 141 may be immediately adjacent to zone 142 with no significant intervening features. Optional construction details of film 145 can also be seen: the film 145 may optionally include optically thick skin layers 510, 512 on opposite sides thereof, with a plurality of microlayers 514 and another plurality of microlayers 516 disposed between the skin layers 510, 512. All of the microlayers 514, 516 are interior to the film 145 by virtue of the outer skin layers. The space between microlayers 514 and 516 is left open in the drawing, to allow for the case where the microlayers 514, 516 are portions of a single microlayer packet that begins at one skin layer 510 and ends at the opposite skin layer 512, and also the case where the microlayers 514, 516 are portions of two or more distinct microlayer packets that are separated from each other by an optically thick protective boundary layer (PBL) or another optically thick interior layer. In either case, the microlayers 514, 516 preferably each comprise two alternating polymer materials arranged into optical repeat units, each of the microlayers 514, 516 extending continuously from the zone 141 to the neighboring zone 142 as shown. The microlayers 514, 516 provide a first transmission and reflection characteristics in the zone 141 by constructive or destructive interference, and at least some of the microlayers 514, 516 are birefringent. The zones 143, 142 may have previously had the same characteristics as zone 141, but have been processed, e.g., by the selective application of heat thereto in an amount sufficient to reduce or eliminate the birefringence of some of the microlayers 514, 516 in the zone 142 while maintaining the birefringence of the microlayers in zone 141, the heat also being low enough to maintain the structural integrity of the microlayers 514, 516 in the treated zone 142. The reduced birefringence of the microlayers 514, 516 in the zone 142 is primarily responsible for second transmission and reflection characteristics for the zone 142 that is different from the first transmission and reflection characteristics for the zone 141.

In some embodiments, the application of heat may be applied to the second zones until the individual layers of the second zone are no longer distinguishable. In this scenario, the second zone no longer transmits and reflects light by primarily by optical interference and instead scatters light transmitted through the zone.

The film 145 has characteristic thicknesses d1, d2 in zone 141, and characteristic thicknesses d1', d2' in zone 142, as shown in the figure. The thicknesses d1, d1' are physical thicknesses measured from a front outer surface of the film to a rear outer surface of the film in the respective zones. The thicknesses d2, d2' are physical thicknesses measured from the microlayer (at one end of a microlayer packet) that is disposed nearest the front surface of the film to the microlayer (at an end of the same or a different microlayer packet) that is disposed nearest the rear surface of the film. Thus, if the thickness of the film 145 in zone 142 is compared with the thickness of the film in zone 142, d1 may be compared d1', or d2 may be compared to d2', depending on which measurement is more convenient. In most cases the comparison between d1 and d1' may well yield substantially the same result (proportionally) as the comparison between d2 and d2'. (Of course, in cases where the film contains no outer skin layers, and where microlayer packets terminate at both outer surfaces of the film, d1 and d2 become the same.) However, where a significant discrepancy exists, such as where a skin layer experiences a significant thickness change from one place to another but no corresponding thickness change exists in the underlying microlayers, or *vice versa,* then it may be desirable to use the d2 and d2' parameters as being more representative of the overall film thickness in the different zones, in view of the fact that the skin layers typically have a minor effect on the reflective characteristics of the film compared to the microlayer packet(s).

For multilayer optical films containing two or more distinct microlayer packets separated from each other by optically thick layers, the thickness of any given microlayer packet can also be measured and characterized as the distance along the z-axis from the first to the last microlayer in the packet. This information may become significant in a more in-depth analysis that compares the physical characteristics of the film 145 in the different zones 141, 142.

As mentioned, the zone 142 has been treated with the selective application of heat to cause at least some of the microlayers 514, 516 to lose some or all of their birefringence relative to their birefringence in neighboring zone 141, such that zone 142 exhibits a reflective characteristic, resulting from constructive or destructive interference of light from the microlayers, that differs from a reflective characteristic of zone 141. The selective heating process may involve no selective application of pressure to zone 142, and it may result in substantially no thickness change (whether using the parameters d1/d1' or the parameters d2/d2') to the film. For example, the film 145 may exhibit an average thickness in zone 142 that deviates from an average thickness in zone 141 by no more than the normal variability in thickness that one observes in the zone 141, or in the untreated film. Thus, the film 145 may exhibit in zone 141, or over an area of the film encompassing a portion of zone 141 and zone 142 before the heat treatment of zone 142, a variability in thickness (whether d1 or d2) of Δd, and the zone 142 may have spatially averaged thicknesses d1', d2' which differ from spatially averaged thicknesses d1, d2 (respectively) in zone 141 by no more than Δd. The parameter Δd may represent, for example, one, two, or three standard deviations in the spatial distribution of the thickness d1 or d2.

In some cases, the heat treatment of zone 142 may give rise to certain changes to the thickness of the film in zone 142. These thickness changes may result from, for example, local shrinkage and/or expansion of the different materials that constitute the multilayer optical film, or may result from some other thermally-induced phenomenon. However, such thickness changes, if they occur, play only a secondary role in their effect on the reflective characteristic of the treated zone 142 compared to the primary role played by the reduction or elimination of birefringence in the treated zone.

In some cases it is possible to distinguish the effect of a thickness change from a change in birefringence by analyzing the reflective properties of the film. For example, if the microlayers in an untreated zone (e.g. zone 141) provide a reflection band characterized by a left band edge (LBE), right band edge (RBE), center wavelength λ_{c}, and peak reflectivity R₁, a given thickness change for those microlayers (with no change in the refractive indices of the microlayers) will produce a reflection band for the treated zone having a peak reflectivity R₂ about the same as R₁, but having an LBE, RBE, and center wavelength that are proportionally shifted in wavelength relative to those features of the reflection band of the untreated zone, and this shift can be measured. On the other hand, a change in birefringence will typically produce only a very minor shift in wavelength of the LBE, RBE, and center wavelengths, as a result of the (usually very small) change in optical thickness caused by the change in birefringence. (Recall that optical thickness equals physical thickness multiplied by refractive index.) The change in birefringence can, however, have a large or at least a significant effect on the peak reflectivity of the reflection band, depending on the design of the microlayer stack. Thus, in some cases, the change in birefringence may provide a peak reflectivity R₂ for the reflection band in the modified zone that differs substantially from R₁, where of course R₁ and R₂ are compared under the same illumination and observation conditions. If R₁ and R₂ are expressed in percentages, R₂ may differ from R₁ by at least 10%, or by at least 20%, or by at least 30%. As a clarifying example, R₁ may be 70%, and R₂ may be 60%, 50%, 40%, or less. Alternatively, R₁ may be 10%, and R₂ may be 20%, 30%, 40%, or more. R₁ and R₂ may also be compared by taking their ratio. For example, R₂/R₁ or its reciprocal may be at least 2, or at least 3.

A significant change in peak reflectivity, to the extent it is indicative of a change in the interfacial reflectivity (sometimes referred to as optical power) resulting from a change in refractive index difference between adjacent layers due to a change in birefringence, is also typically accompanied by at least some change in the bandwidth of the reflection band, where the bandwidth refers to the separation between the LBE and RBE.

As previously discussed, in some cases the thickness of the film 145 in the treated zone 142, i.e., d1' or d2', may differ somewhat from the thickness of the film in the untreated zone 141, even if no selective pressure was in fact applied to the zone 142 during heat treatment. For this reason, FIG. 5 depicts d1' as being slightly different from d1, and d2' as being slightly different from d2. A transition zone 143 is also shown for generality, to show that a "bump" or other detectable artifact may exist on the outer surface of the film as a consequence of the selective heat treatment. In some cases, however, the treatment may result in no detectable artifact between the neighboring treated and untreated zones. For example, in some cases an observer who slides his or her finger across the boundary between the zones can detect no bump, ridge, or other physical artifact between the zones.

Under some circumstances it is possible for thickness differences between treated and untreated zones to be non-proportional through the thickness of the film. For example, in some cases it is possible for an outer skin layer to have a relatively small thickness difference, expressed as a percentage change, between the treated and untreated zones, while one or more internal microlayer packets may have a larger thickness difference, also expressed as a percentage change, between the same zones. In some embodiments, a difference between an average thickness of each layer in the plurality of layers in the first and second zones is less than about 5%.

As illustrated in FIG. 5, each layer in the plurality of layers of film 145 is unitary across the first 141 and second 142 zones. There is no layer in the plurality of layers 514, 516 that has a physical interface between the first and second zones. At least one layer in the plurality of layers 514, 516 has the same chemical composition, but not the same orientation or the same crystallinity, in the first 141 and second 142 zones.

As previously discussed with reference to FIG. 4, each layer in the plurality of layers of multilayer optical film 145 comprises three main indices nx, ny and nz along respective mutually orthogonal x, y and z directions, x and y directions being in a plane of the layer, z direction being along a thickness direction of the layer. In some implementations, each of at least one main index of at least one layer in the plurality of layers has different values in the first and second zones. In some implementations, each of at least two main indices of at least one layer in the plurality of layers has different values in the first and second zones. In some implementations, the multilayer optical film 145 comprises a plurality of alternating first and second layers (as illustrated by layers A and B of FIG. 4) that extend the adjacent first and second zones 141, 142 of the multilayer optical film 145, each main index of each first layer (A layer) having a same value in the first and second zones 141, 142, each main index of each second layer (B layer) having different values in the first and second zones 141, 142.

In some implementations, the multilayer optical film 145 comprises a plurality of alternating first and second layers (A and B layers of FIG. 4) extending the adjacent first and second zones 141, 142 of the multilayer optical film 145. Each first layer (A layer) has the same nz in the first and second zones 141, 142 and each second layer (B layer) has a greater nz in first zone 141 than the second zone 142.

For example, the multilayer optical film may include a plurality of alternating first and second layers (A and B layers of FIG. 4) extending the adjacent first 141 and second 142 zones of the multilayer optical film 145, each first layer (A layer) is substantially isotropic in the first and second zones 141, 142 and each second layer (B layer) is crystalline in the first zone 141 and is isotropic in the second zone 142.

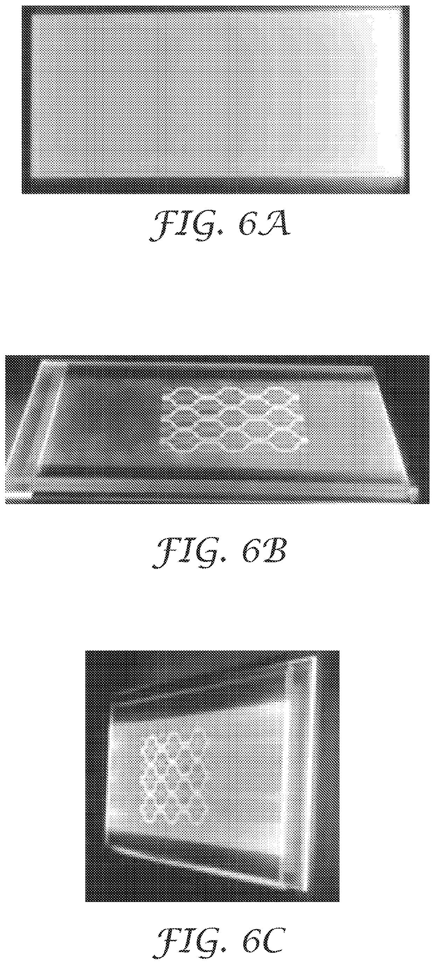

FIGS. 6A - 6C illustrate the angle selectivity of the light sources disclosed herein. FIG. 6A illustrates a top view of a light source having the construction illustrated in FIG. 1A. The light source includes an MOF having a second zone that defines a honeycomb pattern. The pattern is not discernible when viewed along a viewing angle that is about normal to the surface of the multilayer optical film. However, when viewed at an angle that is sufficiently off axis from normal, as shown in FIGS. 6B and 6C, the pattern is clearly evident. As illustrated by FIGS. 6A, 6B, and 6C, during operation of the light source, the pattern formed by the second zone is more visible when viewed along the second incidence angle (off axis from normal) than along the first incidence angle (normal to the surface of the MOF). During operation of the light source, when viewed along the second incidence angle (off axis from normal) in the absence of ambient light, the second zone is substantially brighter than the first zone.

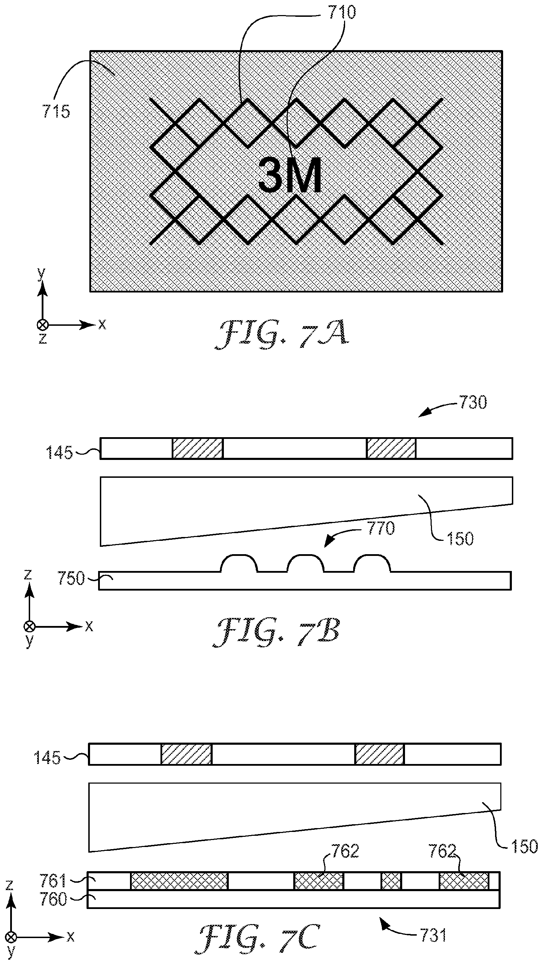

In some embodiments, the bottom side of the light source may be patterned. For example, the diffuse reflector of the light source can include a 2 dimensional (2D) or 3 dimensional (3D) pattern, as illustrated in FIGS. 7A and 7B. FIG. 7A provides a top view of a diffuse reflector that includes a 2D pattern 710 formed thereon. The 2D pattern 710 may be formed, for example, by printing or any other suitable marking process. In some embodiments, the bottom side includes a first pattern 715 primarily for scattering light emitted by the illumination device or reflected by the multilayer optical film and a second pattern 710 primarily for being visible through the multilayer optical film.

In some implementations, as illustrated by the side view of light source 730 of FIG. 7B, the bottom side has a three-dimensional shape that forms a 3D pattern 770, the diffuse reflector 750 conforming to the 3D shape. For either 2D or 3D configurations, the pattern 710, 770 may be configured to be visible through the multilayer optical film 145. The pattern 710, 770 may comprise a regular pattern and/or an indicia, such as at least one of a letter, a word, an alphanumeric, a symbol, a logo, a text, a picture, and an image, for example.

As shown in the side view of FIG. 7C, in some implementations, the light source includes a bottom side that comprises a diffuse reflector 760 and a patterned layer 761 disposed on at least a portion of the diffuse reflector 760, the patterned layer 761 including a pattern 762 configured to be visible through the multilayer optical film 145.

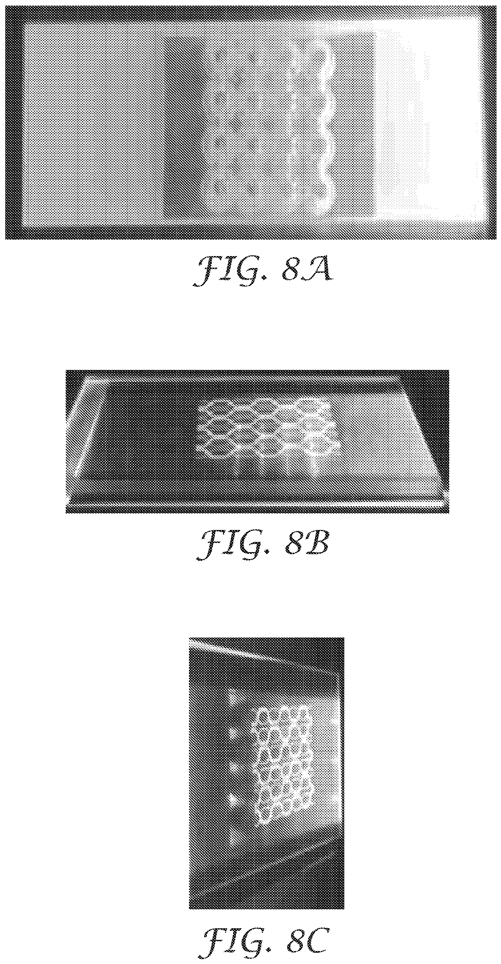

FIGS. 8A - 8C illustrate a light source having a patterned MOF and a 3D patterned diffuse reflector. In this example, the diffuse reflector conforms to a 3D shape of the back side. The MOF has a second zone that defines a honeycomb pattern. In the example, the pattern on the back side are clearly visible on-axis with high contrast due to the light scattered by the patterns, but the patterns on the MOF are less visible or invisible on-axis. When observed at off-axis, the pattern on the back side disappears or substantially disappears, and the pattern on the MOF is visible with high contrast.

FIG. 8A illustrates a top view of the light source. The pattern of the 3D patterned diffuse reflector can be seen and the pattern of the MOF is not discernible when viewed along a viewing angle that is about normal to the surface of the light source. However, when viewed at an angle that is sufficiently off axis from normal, as shown in FIGS. 8B and 8C, the pattern of the MOF is clearly evident and the pattern of the back surface is not visible.

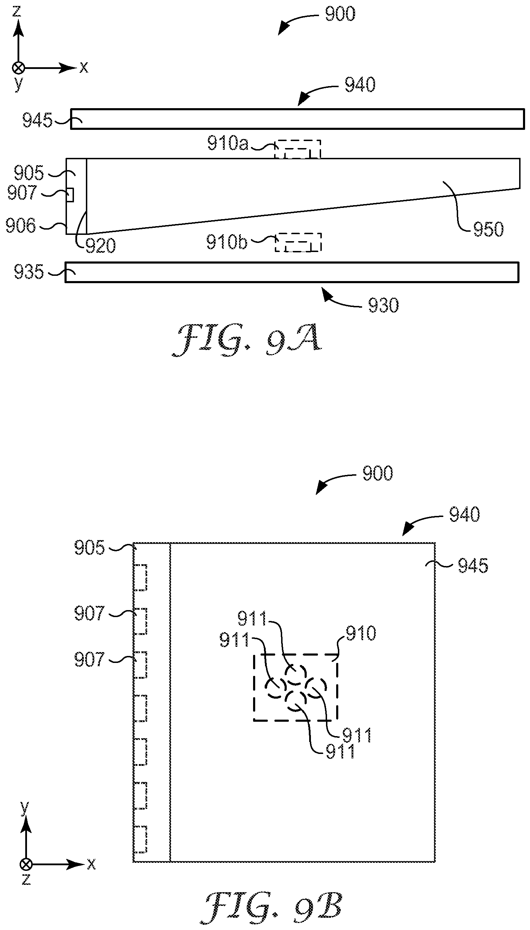

In some embodiments a light source can include a patterned or unpatterned MOF that transmits and reflects light primarily by optical interference used in conjunction with multiple illumination devices. FIG. 9A shows a side view and FIG. 9B shows a top view of a light source 900 having a top side 940 comprising an MOF 945 (which may be patterned or unpatterned), a light guiding section 950, and a bottom side 930 comprising a diffuse reflector 935. The light source includes a first illumination device 905 disposed between the top 940 and bottom 930 surfaces proximate an input side 920 of the light source 900. The light source includes a second illumination device 910 disposed between top 940 and bottom 930 surfaces, the second illumination device 910 is illustrated in FIG. 9A at two alternate locations 910a, 910b. The first and/or second illumination device 905, 910 may include a single light source or may include multiple light sources 907, 911 as shown in FIG. 9B.

The first illumination device 905 includes at least one illumination source 907 disposed between a back reflector 906 and the input side 920 of the light source 900. The second illumination device 910 includes at least one illumination source 911. The illumination sources 907, 911 may each comprise at least one of a lamp, a cold cathode tube, a light emitting diode (LED), an organic light emitting diode (OLED), a laser, and a vertical cavity surface-emitting laser (VCSEL), for example.

In some embodiments, both the first illumination device 905 and the second illumination device 910 emit monochromatic light of a first wavelength. In some embodiments, the first illumination device 905 emits substantially monochromatic light at the first wavelength and the second illumination device 910 emits substantially monochromatic light at a second wavelength that is different from the first wavelength. According to some implementations, the first illumination device 905 emits light of the first wavelength that is in the visible wavelength region of the electromagnetic radiation spectrum. For example, the first wavelength may be in the blue, yellow, amber, green, or red wavelength region of the electromagnetic radiation spectrum. The illumination device 905 may be configured to emit the blue, yellow, amber, green, or red light. According to some implementations, the second illumination device 910 emits light of the second wavelength that is in the visible wavelength region of the electromagnetic radiation spectrum. For example, the second wavelength may be in the blue, yellow, amber, green, or red wavelength region of the electromagnetic radiation spectrum. The second illumination device 910 may be configured to emit the blue, yellow, amber, green, or red light.

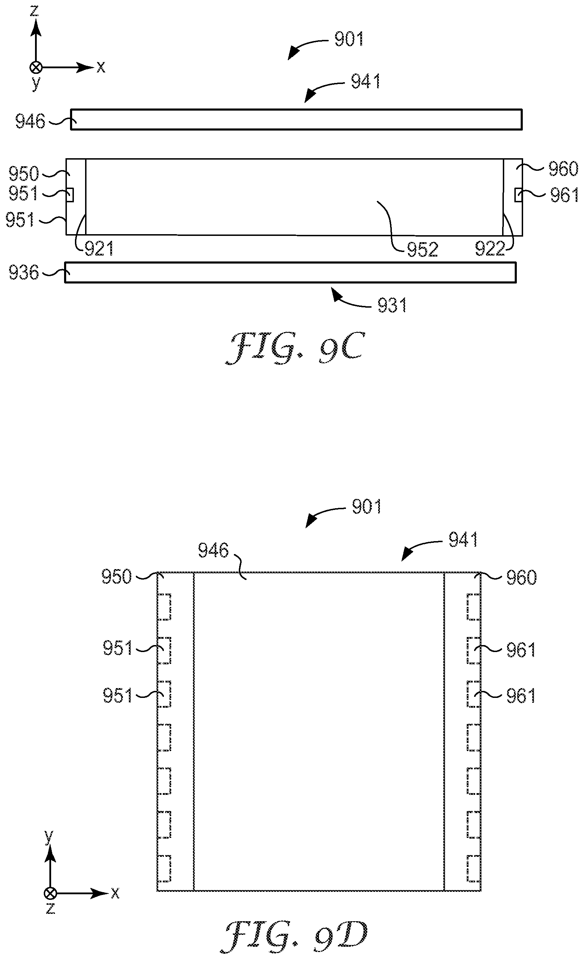

FIG. 9C shows a side view and FIG. 9D shows a top view of an embodiment of a light source 901 having a top side 941 comprising an MOF 946 (which may be patterned or unpatterned) that transmits and reflects light primarily by optical interference. The light source 901 further includes a lightguiding section 952, and a bottom side 931 comprising a diffuse reflector 936. The light source 901 includes a first illumination device 950 disposed between the top 941 and bottom 931 sides proximate a first input side 921 of the light source 901. The light source 901 includes a second illumination device 960 disposed between top 941 and bottom 931 sides proximate a second input side 922 of the light source 901. The first and/or second illumination devices 950, 960 can include a single light source or may include multiple light sources 951, 961 as shown in FIG. 9D.

As previously discussed, in some embodiments, both the first illumination device 950 and the second illumination device 960 emit monochromatic light of a first wavelength. In some embodiments, both the first illumination device 950 and the second illumination device 960 emit substantially monochromatic light that is in the visible wavelength region of the electromagnetic radiation spectrum.

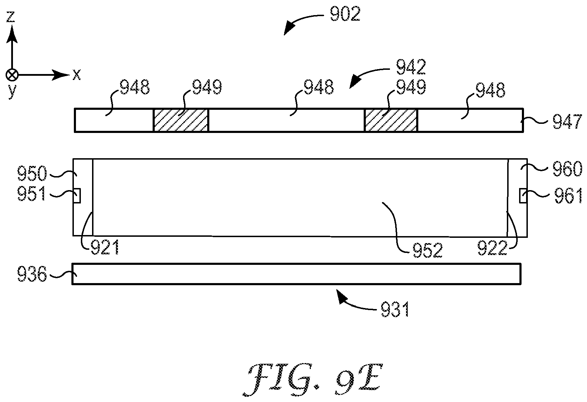

FIG. 9E illustrates a light source 902 that is similar in many respects to the light source 901 shown in FIGS. 9C and 9D. The light source 902 includes a top side 942 comprising a patterned MOF 947 having first and second zones 948, 949, wherein at least the first zones 948 transmit and reflect light primarily by optical interference. In some implementations, both the first and the second zones 948, 949, transmit and reflect light primarily by optical interference.

The light source 902 includes a substantially monochromatic first illumination device 950 emitting light at the first wavelength and a substantially monochromatic second illumination device 960. For light at the first wavelength incident at a first incidence angle, each of the first and second zones 948, 949 of the multilayer optical film 947 has a substantially greater optical transmittance than reflectance. For light at the second wavelength incident at the first incidence angle, the second zone 949 of the multilayer optical film 947 has a substantially greater optical transmittance than the first zone 948 of the multilayer optical film 947. As shown in FIG. 9E, the first illumination device 950 may be disposed proximate and on a first input side 921 of the light source 902 between the top and bottom sides 942, 931. The second illumination device 960 may be disposed between the top and bottom sides 942, 931 proximate and on a second input side 922 of the light source 902 that is opposite the first input side 921.

In some implementations, the second illumination device 960 emits substantially monochromatic light at the first wavelength. In some implementations, the second illumination device 960 emits substantially monochromatic light at a second wavelength, different from the first wavelength.

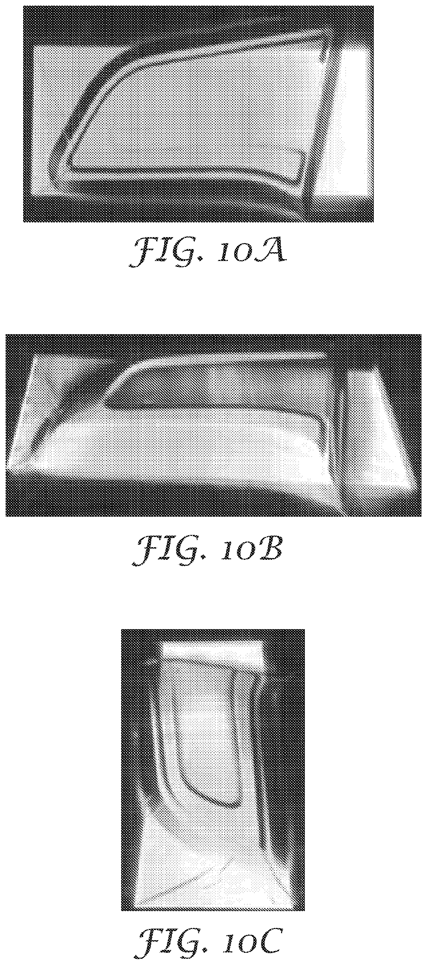

In some embodiments, the multilayer optical films of light sources described herein may be formed into three dimensional (3D) shapes. These 3D formed MOF embodiments allow for unique designs that provide for a chrome appearance, sharp, contrasting lines, and other interesting designs. The 3D shapes may be formed by thermo-forming wherein the optical properties of the MOFs are largely maintained after thermo-forming. FIGS. 10A - 10C illustrate a light source having a 3D formed unpatterned MOF. FIG. 10A illustrates a top view of the light source wherein the viewing angle is substantially along an axis normal to the plane of the top of the MOF. FIGS. 10B and 10C show views of the light source viewed at an angle that is off axis to the normal axis.

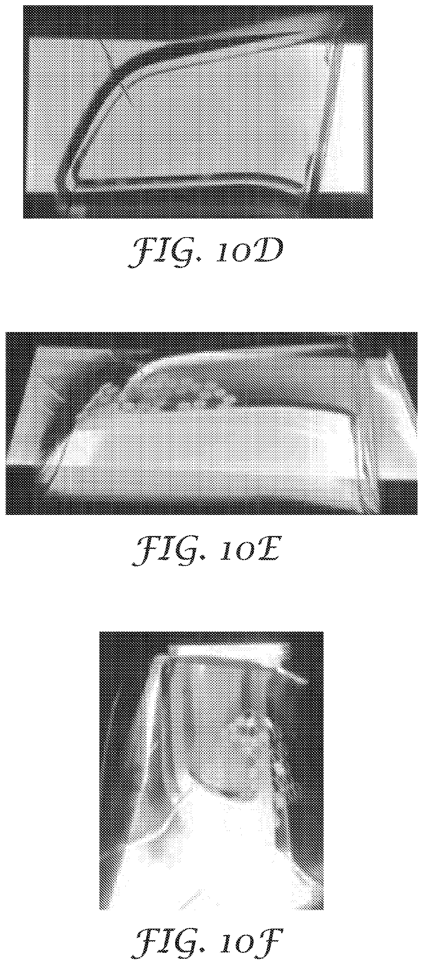

FIGS. 10D - 10F illustrate a light source having a 3D formed patterned MOF. FIG. 10D illustrates a top view of the light source wherein the viewing angle is substantially along an axis normal to the plane of the top of the patterned MOF. As shown in FIG. 10D, the pattern of the MOF is not discernible or is not substantially discernible when the light source is viewed along a viewing angle that is about normal to the top surface of the light source. However, when viewed at an angle that is sufficiently off axis from normal, as shown in FIGS.10E and 10F, the pattern of the MOF is evident.

Light sources discussed herein are useful in a variety of applications including, for example, automotive applications. Light sources that include multiple illumination devices, can be as multifunction indicators. For example, the light sources illustrated in FIGS. 9A - 9D include a substantially monochromatic first illumination device emitting light at the first wavelength and a substantially monochromatic second illumination device. The light sources 900, 901, 902 each include a multilayer optical film 945, 946, 947 transmitting and reflecting light primarily by optical interference. The first illumination device 905, 950, can be configured to be activated and emit light at the first wavelength for a first function and the second illumination device 910, 960 can be configured to be activated and emit light at the first wavelength (or at a different second wavelength) for a different second function.

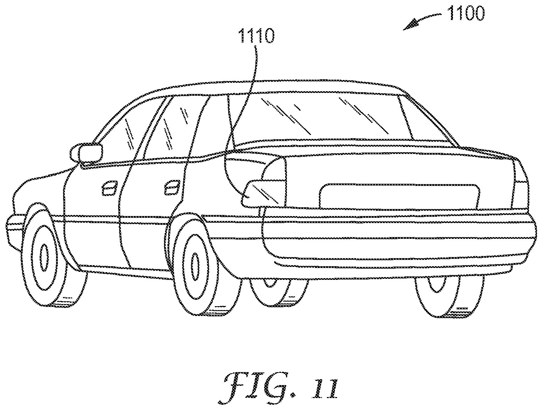

FIG. 11 illustrates a vehicle 1100 that includes at least one of the light sources 1110 disclosed herein. For example, the light source 1110 may be used as a running light, position, e.g., turn, indicator, backup function and/or a brake indicator. In some implementations, when used as an indicator the first function mentioned above may comprise a position indicator and the second function may comprise a brake indicator.

Additionally, or alternatively, embodiments that include retroreflectors, e.g., see FIGS. 1F, 1G, 1H, may be used in various locations on the vehicle. In some implementations, an illumination device is included (FIGS. 1G, 1H), e.g., to serve as a position indicator and/or brake indicator. In some locations, an illumination device is not included, e.g., and the disclosed embodiments are used to provide retroreflective areas on the vehicle. In various embodiments, the embodiments disclosed herein may be used as a rear and/or side retroreflector in the vehicle light, as a rear retroreflector in the vehicle fascia and/or as a side retroreflector in the vehicle lamp, as a rear and/or side retroreflector in the vehicle fascia, as a side amber retroreflector in the vehicle front light, and/or as a side amber retroreflector in the vehicle fascia, for example.

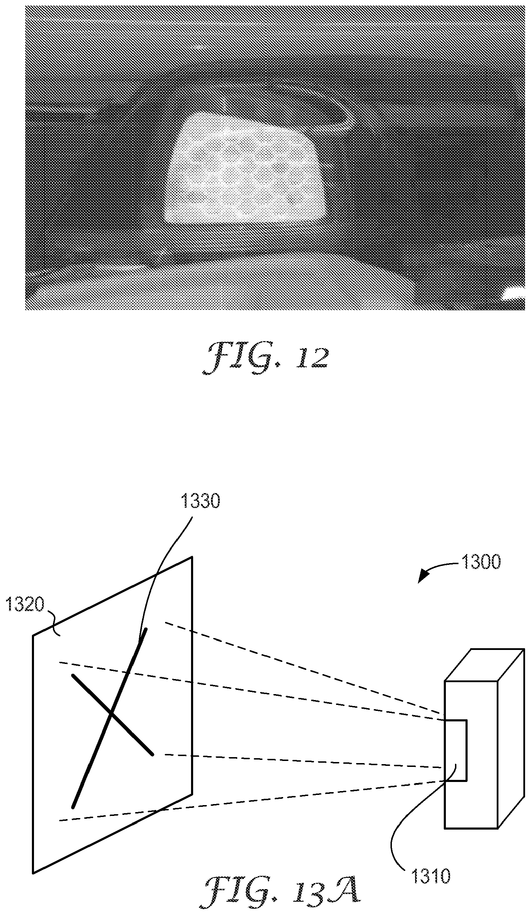

Embodiments disclosed herein can provide for integration of a back reflector for a light source, e.g., used as a vehicle lamp, as well as a retroreflector. FIG. 12 is a photographic demonstration of a light source having back reflector and retroreflector integration. In these embodiments, two functions (reflector and retroreflector) are integrated onto a single reflector component. Optionally, when the MOF is patterned, a sharp, contrasting light pattern can be created. The example shown in FIG. 12 uses an illumination device comprising LEDs arranged along the input side of the light source and facing toward the lightguiding cavity. 3M Scotchlite was used as the back reflector. The photograph shown in FIG. 12 was taken with flash and shows a patterned zone that is noticeably brighter than the unpatterned zone. When the flash is not on, the image is of a uniform, unpatterned lamp.

As illustrated in FIG. 13A in some applications, a light source disclosed herein may be used in a projections system. FIG. 13A depicts a projection system 1300 that includes a light source 1310 as disclosed herein, e.g., such as the light source illustrated in FIG. 1A. For example, the projection system 1300 may be configured to project an indicia, alphanumeric, image or other content 1330 onto a display screen 1320 or road surface. The content displayed corresponds to the pattern formed by the second zones of the patterned MOF of the light source.

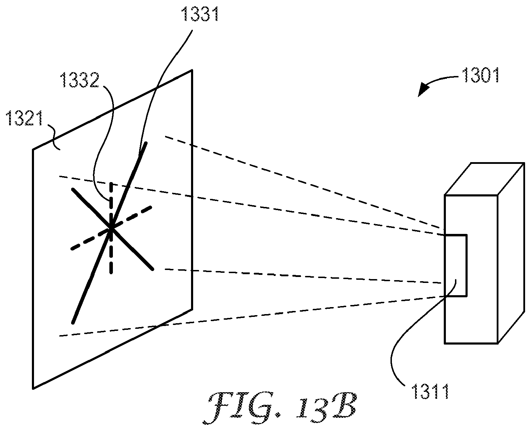

In some applications, as shown in FIG. 13B, the light source may include first and second illumination devices. FIG. 13B depicts a projection system 1301 that includes a light source 1311 as disclosed herein, e.g., such as the light source illustrated in FIG. 9A. The light source 1311 includes first and second illumination devices. A first illumination device of the light source 1311 is used to project an indicia, alphanumeric, image or other first content 1331 onto a display screen 1321 or road surface. The first content 1331 may correspond to the pattern formed by the second zones of the patterned MOF of the light source. The second illumination device of the light source 1311 is used to project second content 1332 on a display screen 1321 or road surface, wherein the first content 1331 may be different from the second content. For example, the first content may be at a first wavelength and the second content may be at a second wavelength. In various implementations, the first content may be a first image, e.g., pattern, indicia, and/or alphanumeric, or other content. The second content may be a second image, e.g., pattern, indicia, alphanumeric, other content, or may provide a uniform illuminated solid appearance.

### EXAMPLE

The following example described fabrication of a multilayer optical film as discussed in various embodiments above.

A dispersion was made through a media milling process. A mixture of 81.37 wt% solvent ethylene glycol, 4.25 wt % dispersant Solplus® D540 (available from Lubrizol Corporation, Wickliffe OH USA) and 14.38 wt% Amaplast® IR-1050 (available from ColorChem, Atlanta GA) was made by first combining the ethylene glycol and Solplus® D540 together using a Dispermat CN-10 laboratory high-shear disperser (BYK-Gardner USA, Columbia MD) until fully dissolved, and then slowly charging in the Amaplast® IR-1050 powder. The mixed dispersion was then milled in a LabStar laboratory media mill (Netzsch, Exton PA USA) loaded with 500 grams of a 0.5mm yttria stabilized zirconia milling media (available from Toray Industries, Tokyo, Japan). The milling proceeded at 4320 rpm. A small amount of sample was taken out periodically and analyzed in order to monitor the milling progress. The dispersion samples for analysis were further diluted in ethylene glycol and the particle size distribution was measured by a Partica LA-950 Laser Diffraction Particle Size Distribution Analyzer (available from Horiba, Irvine, CA USA) equipped with a MiniFlow Cell. The milling proceeded until the desired level of fineness was achieved as characterized by the particle distribution as measured by the Partica LA-950: a mean particle size of approximately 0.3 micrometers was thus achieved; and no measurable portion of the distribution was over 1 micrometers nor under 0.1 micrometers. Furthermore, the dispersion was stable without significant settling prior to use in the subsequent masterbatch resin making.

A so-called coPEN 90/10 masterbatch with the IR absorbing Amaplast® IR-1050 was synthesized according to the following procedure: a stainless steel, oil jacketed batch reactor was charged with monomersand catalysts. The final charge of materials comprised 55.7 weight% dimethyl 2,6-naphthalene dicarboxylate (NDC) (available from BP Amoco Naperville IL USA), 4.9 weight % dimethyl terephthalate (DMT) (available from Invista, Wichita KS USA), 34.8 weight% ethylene glycol (EG) (available from ME Global, Midland MI USA), and 4.5 weight % of the dispersion, as well as 121 ppm of cobalt diacetate tertrahydrate (available from Shepherd Chemical, Cincinnati OH USA), 121 ppm zinc diacetate dihydrate (available from Avantor Performance Materials, Center Valley PA USA), 303 ppm antimony triacetate (available from Performance Additives, Subang Jaya, Selangor Malaysia) and 242 ppm of triethylphosphonoacetate (TEPA) (available from Mytech Specialty Chemicals Burlington NC USA). Initially, the reactor was charged with everything except the TEPA and the dispersion. Under pressure (239.2 kPa), the mixture was heated to 257° C with removal of esterification reaction byproduct, methanol. After the methanol was completely removed, the TEPA was charged to the reactor. After 5 min of dwell time the pressure was gradually reduce to below 500 Pa and the dispersion was charged under pressure raising the kettle pressure to 115.1 kPa. After 5 min of dwell time the pressure was then gradually reduced to below 500 Pa while heating to 279° C. The condensation reaction byproduct, ethylene glycol, was continuously removed until a resin having an intrinsic viscosity of about 0.50 dL/g, as measured in 60/40 wt. % phenol/o-dichlorobenzene at 30° C, was produced.

Using this masterbatch, a laser-imageable optical film comprising a group of interior layers arranged to selectively reflect near infra-red and visible light by constructive or destructive interference was made by the co-extrusion and orientation of multi-layer thermoplastic films in accord with the general methods described by U.S. Patent 5,882,774 (Jonza et al.), U.S. Patent 6,352,761 (Hebrink et al.), U.S. Patent 6,830,713 (Hebrink, et al.), U.S. Patent 6,946,188 (Hebrink, et al.) and International Patent Application WO 2010/075357 A1 (Merrill, et al.). More specifically a coPET with sodium sulfateisophthalate as described in Example 5 as polyester K of Patent Application WO 2007/149955 A2 (Liu, et al henceforth referred to as CoPET-1 was co-extruded with a coPEN 90/10 as described in Example 1 of U.S. Patent 6,946,188.

CoPEN 90/10 and coPET-1 were extruded and pumped through melt trains at final setpoints of 274°C and 260°C respectively, in a proportion of 3:4 on a weight basis, into a 550 layer feedblock set at 279°C. The coPEN 90/10 melt stream was simultaneously fed virgin resin and the masterbatch resin with Amaplast® IR-1050 in a proportion of 6:1. The coPET-1 stream also fed the protective boundary stream comprising about 20% of the coPET-1 feed. The feedblock was divided into two separate layer packets, each comprising 275 layers and each packet equipped with a gradient plate to create a layer pair thickness gradient through each packet. The optical layer pair thickness gradient was approximately linear through each packet, with the thickest layers of the thinner packet similar in thickness to the thinnest optical layers of the thicker packet. The multilayer flow from the feedblock was combined with two additional co-extruded skin layers streams set at 274°C of coPEN 90/10 with 0.1 wt% synthetic fumed amorphous silica as a slip agent. The two outer skins comprised about 18 weight% of the film construction. The combined stream was then cast from a die at 279°C and electrostatically pinned onto a quenching wheel. The cast film showed no evidence of flow defects. The cast film with Amaplast® IR-1050 was subsequently reheated above the glass transition temperature of the coPEN 90/10, stretched over rollers in a length oriented to a draw ratio of about 3.7, and then heated to approximately 125° C and stretched transversely to a draw ratio of about 3.5 and then slightly relaxed transversely to a final draw ratio of just under 3.5 in a tenter. The film was heat set at about 238° C after stretching, and then wound into a roll of film. The resulting optical film was approximately 63 micrometers thick.

The film was a far-red/infra-red reflector at normal incidence. The film appeared slightly gray but mostly colorless when backlit to view the normal-angle transmitted color. The grayish hue was the result of the Amaplast® IR-1050 which absorbed roughly about 10% of the transmitted light in the visible spectrum at the loading used here. When the film was viewed off-normal angle, the film displayed a cyan transmitted color. At off-normal angles under conditions that favored the viewing of specularly reflected light, the film appeared a metallic copper-red. The transmission spectra of the resulting multilayer reflecting film was measured with a Lambda 950 spectrophotometer (available from Perkin-Elmer, Waltham MA). The film exhibited a strong normal incidence reflection band, as manifest as a transmission well in the spectrum between about 700 and 1050 nanometers. Transmission between 750 and 950 nm was typically less than 5%, and no more than 10%, at each measured wavelength, indicating high levels of reflectivity in this band.

Some of the film was imaged, e.g. the reflectivity was patterned, by the selective exposure to the output of a pulsed fiber laser with a wavelength of 1064 nm (20W HM series from SPI Lasers, Southampton, UK), e.g. in accord with the methods of International Patent Application WO 2010/075357 A1 (Merrill, et al.). The film was placed on a stainless steel plate and the laser was impinged on the side of the film containing the thinner layers of the optical stack. Significant reflectivity reduction in the far red/near infra-red was accomplished without charring or other defects at a pulse rate (repetition rate) of 500 kHz, and an average nominal power of 8 watts. The output of the laser was fiber delivered to a hurrySCAN II 14 galvanometer scanner (SCANLAB AG, Puccheim, Germany) and focused using an f-theta lens with a numerical aperture of 0.15 (Sill Optics GmbH, Wendelstein, Germany). The focal point of the f-theta lens was located close to the surface of the samples. The laser beam was manipulated with the galvanometer scanner to produce patterns on the samples using a rastered configuration at 280 dots per inch (dpi) with a jump speed of 4954 mm/s and a jump delay of 50 microseconds as controlled by the Winlase Software (available from Lanmark Controls, Inc., Acton, MA). A typical rastered, patterned area was approximately 120 mm x 70 mm.
Embodiments discussed in the disclosure include at least the following items.
Item 1. A light source comprising:
   a substantially monochromatic illumination device emitting light at a first wavelength;
   an input side proximate the illumination device for receiving light at the first wavelength from the illumination device;
   a bottom side comprising a diffuse reflector; and
   a top side comprising an optical film having a plurality of layers, each layer extending adjacent first and second zones of the optical film and transmitting and reflecting light in the at least the first zone primarily by optical interference, at least one layer in the plurality of layers having different birefringence in the first and second zones so that for light at the first wavelength incident at a first incidence angle, each of the first and second zones of the optical film has a substantially greater optical transmittance than reflectance, and for light at the first wavelength incident at a greater second incidence angle, the first zone of the optical film has a substantially smaller optical transmittance than reflectance, and the second zone of the optical film has a substantially greater optical transmittance than the first zone of the optical film.
Item 2. The light source of item 1, wherein the optical film transmits and reflects light in the first and second zones primarily by optical interference.
Item 3. The light source of any of items 1 through 2, wherein the illumination device comprises a back reflector and an illumination source disposed between the back reflector and the input side of the light source.
Item 4. The light source of any of items 1 through 3, wherein the illumination device comprises an optical filter at an output side of the illumination device, the optical filter transmitting light at the first wavelength and at least one of reflecting and absorbing light at other wavelengths.
Item 5. The light source of any of items 1 through 4, wherein the illumination device comprises an illumination source comprising at least one of a lamp, a cold cathode tube, a light emitting diode (LED), an organic light emitting diode (OLED), a laser, and a vertical cavity surface-emitting laser (VCSEL). Item 6. The light source of any of claims 1 through 5, wherein the first wavelength is in a visible wavelength region of an electromagnetic radiation spectrum.
Item 7. The light source of any of items 1 through 6, wherein the first wavelength is in a blue, yellow, amber, green, or red wavelength region of an electromagnetic radiation spectrum.
Item 8. The light source of any of items 1through 7, wherein the illumination device emits blue, yellow, amber, green, or red light.
Item 9. The light source of any of items 1 through 8 comprising a substantially monochromatic second illumination device emitting light at a different second wavelength than the first wavelength, such that for light at the first wavelength incident at the first incidence angle, each of the first and second zones of the optical film has a substantially greater optical transmittance than reflectance, and for light at the second wavelength incident at the first incidence angle, the second zone of the optical film has a substantially greater optical transmittance than the first zone of the optical film.
Item 10. The light source of any of items 1 through 9 wherein:
   the substantially monochromatic first illumination device emitting light at the first wavelength is disposed proximate and on one side of the input side; and
   a substantially monochromatic second illumination device disposed between the top and bottom side and on an opposite side of the input side.
Item 11. The light source of item 10, wherein the substantially monochromatic second illumination device emits light at a second wavelength different than the first wavelength.
Item 12. The light source of item 10, wherein the substantially monochromatic second illumination device emits light at the first wavelength.
Item 13. A vehicle comprising the light source of item 10, wherein the first illumination device is configured to be activated and emit light at the first wavelength for a first function, and the second illumination device is configured to be activated and emit light at the first wavelength for a different second function.
Item 14. The light source of any of items 1 through 13, wherein the input side, the bottom side and the top side define a solid lightguiding region therebetween.
Item 15. The light source of any of items 1 through 13, wherein the input side, the bottom side and the top side define a hollow lightguiding region therebetween.
Item 16. The light source of any of items 1 through 15, wherein a separation between the top and bottom sides decreases along a length of the light source.
Item 17. The light source of any of items 1 through 16, wherein a separation between the optical film and the diffuse reflector decreases along a length of the light source.
Item 18. The light source of any of items 1 through 17, wherein the diffuse reflector is primarily a diffuse surface reflector.
Item 19. The light source of any of items 1 through 17, wherein the diffuse reflector is primarily a diffuse volume reflector.
Item 20. The light source of any of items 1 through 19, wherein the bottom side comprises a pattern configured to be visible through the optical film.
Item 21. The light source of item 20, wherein the pattern comprises a regular pattern.
Item 22. The light source of item 20, wherein the pattern comprises an indicia.
Item 23. The light source of item 22, wherein the indicia comprises at least one of a letter, a word, an alphanumeric, a symbol, a logo, a text, a picture, and an image.
Item 24. The light source of any of items 1 through 23, wherein the bottom side has a three-dimensional shape, the diffuse reflector conforming to the shape.
Item 25. The light source of any of items 1 through 24, wherein the bottom side further comprises a patterned layer disposed on at least a portion of the diffuse reflector, the patterned layer configured to be visible through the optical film.
Item 26. The light source of any of items 1 through 25, wherein the bottom side comprises:
   a first pattern primarily scattering light emitted by the illumination device or reflected by the optical film; and
   a second pattern primarily for being visible through the optical film.
Item 27. The light source of an of items 1 through 26, wherein the diffuse reflector comprises a retroreflector.
Item 28. The light source of item 27, wherein the retroreflector comprises a prismatic retroreflector.
Item 29. The light source of item 27, wherein the retroreflector comprises a plurality of cube-corner elements.
Item 30. The light source of item 27, wherein the retroreflector comprises a lens-mirror retroreflector.
Item 31. The light source of item 27, wherein the retroreflector comprises a plurality of spherical beads.
Item 32. The light source of any of items 1 through 31 further comprising a retroreflector layer disposed between the top and the bottom sides.
Item 33. The light source of any of claims 1 through 32, wherein each light ray emitted from the monochromatic lamp and incident on the top side along an incidence direction that is transmitted by the top side exits the light source along a transmitted direction that is substantially along the incidence direction.
Item 34. The light source of item 33, wherein the transmitted direction deviates from the incidence direction by less than 5 degrees.
Item 35. The light source of any of items 1 through 34, wherein the top side transmits light primarily by virtue of optical interference and not a change in light direction.
Item 36. The light source of any of items 1 through 35, wherein each layer in the plurality of layers is unitary across the first and second zones.
Item 37. The light source of any of items 1 through 36, wherein there is no layer in the plurality of layers has a physical interface between the first and second zones.
Item 38. The light source of any of items 1 through 37, at least one layer in the plurality of layers comprises a same chemical composition, but not orientation or crystallinity, in the first and second zones.
Item 39. The light source of any of items 1 through 38, wherein each layer in the plurality of layers comprises three main indices nx, ny and nz along respective mutually orthogonal x, y and z directions, x and y directions being in a plane of the layer, z direction being along a thickness direction of the layer.
Item 40. The light source of any of items 1 through 39, wherein each of at least one main index of at least one layer in the plurality of layers has different values in the first and second zones.
Item 41. The light source of item 39, wherein each of at least two main indices of at least one layer in the plurality of layers has different values in the first and second zones.
Item 42. The light source of item 39, wherein the optical film comprises a plurality of alternating first and second layers extending the adjacent first and second zones of the optical film, each main index of each first layer having a same value in the first and second zones, each main index of each second layer having different values in the first and second zones.
Item 43. The light source of item 39, wherein the optical film comprises a plurality of alternating first and second layers extending the adjacent first and second zones of the optical film, each first layer having a same nz in the first and second zones, each second layer having a greater nz in first zone than the second zone.
Item 44. The light source of item 39, wherein the optical film comprises a plurality of alternating first and second layers extending the adjacent first and second zones of the optical film, each first layer being isotropic in the first and second zones, each second layer being crystalline in the first zone and isotropic in the second zone.
Item 45. The light source of any of claims 1 through 44, wherein a difference between an average thickness of each layer in the plurality of layers in the first and second zones is less than about 10%.
Item 46. The light source of any of claims 1 through 45, wherein in operation, the second zone is more visible when viewed along the second incidence angle than along the first incidence angle.
Item 47. The light source of any of items 1 through 46, wherein in operation and when viewed along the second incidence angle in the absence of ambient light, the second zone is substantially brighter than the first zone.
Item 48. The light source of any of items 1 through 47, wherein the optical film has a three-dimensional shape.
Item 49. The light source of any of items 1 through 48, wherein the optical film comprises a plurality of first and second zones, the second zones forming a regular pattern.
Item 50. The light source of any of claims 1 through 49, wherein the optical film comprises a plurality of first and second zones, the second zones forming an indicia.
Item 51. The light source of item 50, wherein the indicia comprises at least one of a letter, a word, an alphanumeric, a symbol, a logo, a text, a picture, and an image.
Item 52. The light source of any of items 1 through 51, wherein the first incidence angle is less than about 10 degrees and the second incidence angle is greater than about 40 degrees.
Item 53. The light source of any of items 1 through 52, wherein for light at the first wavelength incident at incidence angles less than about 10 degrees, each of the first and second zones of the optical film has a substantially greater optical transmittance than reflectance.
Item 54. The light source of any of items 1 through 53, wherein for light at the first wavelength incident at incidence angles in a range from about 40 to 70 degrees, the first zone of the optical film has a substantially smaller optical transmittance than reflectance, and the second zone of the optical film has a substantially greater optical transmittance than the first zone of the optical film.
Item 55. The light source of any of items 1 through 54 wherein the light source emits a cone of light at the first wavelength from a region of the first zone, the cone of light propagating along a central direction substantially normal to the region with an angular full width at half maximum intensity of about 30 degrees.
Item 56. The light source of any of items 1 through 54 wherein the light source emits a cone of light at the first wavelength from a region of the second zone, the cone of light propagating along a central direction substantially normal to the region with an angular full width at half maximum intensity of about 70 degrees.
Item 57. The light source of any of items 1 through 56, wherein for light at the first wavelength incident at the first incidence angle, each of the first and second zones of the optical film have a greater optical transmittance than reflectance by at least 50%.
Item 58. The light source of any of items 1 through 57, wherein for light at the first wavelength incident at the second incidence angle, the first zone of the optical film has a smaller optical transmittance than reflectance by at least 50%.
Item 59. The light source of any of items 1 through 58, wherein for light at the first wavelength incident at the second incidence angle, the second zone of the optical film has a greater optical transmittance than the first zone of the optical film by at least 30%.
Item 60. The light source of any of items 1 through 59, wherein for light at the first wavelength incident at the second incidence angle, the second zone of the optical film has a substantially greater optical transmittance than reflectance.
Item 61. The light source of item 60, wherein for light at the first wavelength incident at the second incidence angle, the second zone of the optical film has a greater optical transmittance than reflectance by at least 30%.
Item 62. The light source of any of items 1 through 61, wherein the second zone of the optical film is optically diffusive.
Item 63. The light source of any of items 1 through 62, wherein the second zone of the optical film is more optically diffusive than the first zone of the optical film.
Item 64. The light source of any of items 1 through 63, wherein the top side further comprises an optical lens disposed on and aligned with the second zone, the optical lens changing a direction of light at the first wavelength transmitted by the second zone of the optical film.
Item 65. The light source of any of claims 1 through 64, further comprising a plurality of discrete optical lenses, wherein the optical film comprises a plurality of spaced apart second zones, each second zone corresponding to and aligned with a different optical lens, the optical lens changing a direction of light at the first wavelength transmitted by the second zone.
Item 66. A projection system comprising the light source of any of claims 1 through 65, and a projection device configured to project an image for viewing.
Item 67. The projection system of item 66, wherein the image corresponds to a pattern formed by the second zones.
Item 68. The projection system of item 67, wherein the light source comprises a second illumination device configured to project a second image that is different from the first image.
Item 69. A light source comprising an optical film comprising a plurality of first and second zones forming a pattern, each zone transmitting and reflecting light primarily by optical interference, such that when the light source emits light, a visibility of the pattern increases with increasing viewing angle.
Item 70. The light source of item 69, wherein the visibility of the pattern increases with increasing viewing angle by virtue of a contrast between the first and second zones increasing with increasing viewing angle.
Item 71. A light source comprising:
   a lightguide comprising a top side comprising an optical film, a bottom side comprising a diffuse reflector, and an input side extending between the top and bottom sides; and
   an illumination source disposed proximate the input side of the lightguide, the optical film having adjacent first and second zones, each zone extending substantially an entire thickness of an optical stack or at least one optical packet of the optical film, light entering the lightguide from the light source propagating within the lightguide and being either reflected or transmitted by the optical film primarily by optical interference, wherein for at least one first incidence angle and at least one wavelength, the first and second zones of the optical film have substantially equal optical transmittance, and for at least one second incidence angle and at least one wavelength, the second zone has substantially greater optical transmittance than the first zone of the optical film.
Item 72. An optical system comprising:
   a retroreflecting layer; and
   an optical film disposed on the retroreflecting layer and comprising a plurality of alternating first and second layers, each first and second layer transmitting and reflecting light primarily by optical interference.
Item 73 .The optical system of 72, wherein each layer extends adjacent first and second zones of the optical film, at least one layer in the plurality of layers having different birefringence in the first and second zones.
Item 74. The optical system of any of items 72 through 73, wherein the retroreflecting layer retroreflects light that is incident on the retroreflecting layer from the optical film side of the optical system.
Item 75. The optical system of any of items 72 through 74, further comprising an illumination source disposed between the retroreflecting layer and the optical film.
Item 76. The optical system of any of items 72 through 75, further comprising an input side extending between the retroreflecting layer and the optical film, and an illumination source disposed proximate the input side.
Item 77. A light source comprising:
   a substantially monochromatic first illumination device configured to emit light at the first wavelength;
   a substantially monochromatic second illumination device configured to emit light at the first wavelength or at a different second wavelength;
   an input side proximate the illumination device for receiving light at the first wavelength from the illumination device;
   a bottom side comprising a diffuse reflector; and
   a top side comprising an optical film having a plurality of layers, the optical film transmitting and reflecting light primarily by optical interference, wherein first illumination device is configured to be activated and emit light for a first function, and the second illumination device is configured to be activated and emit light for a different second function.
Item 78. The light source of item 77, wherein the first function is a position indicator of a vehicle and the second function is a brake indicator for the vehicle.

Unless otherwise indicated, all numbers expressing quantities, measurement of properties and so forth used in the specification and claims are to be understood as being modified by the term "about". Accordingly, unless indicated to the contrary, the numerical parameters set forth in the specification and claims are approximations that can vary depending on the desired properties sought to be obtained by those skilled in the art utilizing the teachings of the present application. Not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the invention are approximations, to the extent any numerical values are set forth in specific examples described herein, they are reported as precisely as reasonably possible. Any numerical value, however, may well contain errors associated with testing or measurement limitations.

Various modifications and alterations of this invention will be apparent to those skilled in the art without departing from the scope and spirit of this invention, and it should be understood that this invention is not limited to the illustrative embodiments set forth herein. All U.S. patents, patent application publications, and other patent and non-patent documents referred to herein are incorporated by reference, to the extent they are not inconsistent with the foregoing disclosure.

## Claims

1. A light source comprising:
a lightguide comprising a top side comprising an optical film, a bottom side comprising a diffuse reflector, and an input side extending between the top and bottom sides; and
an illumination source disposed proximate the input side of the lightguide, the optical film having adjacent first and second zones, each zone extending substantially an entire thickness of an optical stack or at least one optical packet of the optical film, light entering the lightguide from the light source propagating within the lightguide and being either reflected or transmitted by the optical film primarily by optical interference, wherein for at least one first incidence angle and at least one wavelength, the first and second zones of the optical film have substantially equal optical transmittance, and for at least one second incidence angle and at least one wavelength, the second zone has substantially greater optical transmittance than the first zone of the optical film.
